## Europäisches Patentamt
## European Patent Office
## Office européen des brevets

(19)

(11) Publication number: **0 222 940 B1**

(12) # EUROPEAN PATENT SPECIFICATION

(45) Date of publication of patent specification: **19.02.92**  (51) Int. Cl.⁵: **G06F 15/40**

(21) Application number: **85307919.2**

(22) Date of filing: **31.10.85**

---

(54) **A fast search processor and method for its use.**

---

(43) Date of publication of application:
**27.05.87 Bulletin 87/22**

(45) Publication of the grant of the patent:
**19.02.92 Bulletin 92/08**

(84) Designated Contracting States:
**DE FR GB IT SE**

(56) References cited:
**EP-A- 0 054 588**
**EP-A- 0 084 626**
**GB-A- 2 156 115**

**COMPUTER, vol. 13, no. 1, January 1980, pages 26-40, IEEE, Long Beach, CA, US; M.J. FOSTER et al.: "The design of special-purpose VLSI chips"**

(73) Proprietor: **TRW INC.**
**23555 Euclid Avenue**
**Cleveland Ohio 44117(US)**

(72) Inventor: **Yu, Kwang-I.**
**377 S. Oak Avenue**
**Pasadena California 91007(US)**
Inventor: **Hsu, Shi-Ping**
**1735 Rose Villa Street**
**Pasadena California 91106(US)**
Inventor: **Hasiuk, Lee Zachery**
**117 N. Lucia Avenue**
**Redondo Beach California 90027(US)**
Inventor: **Otsubo, Peggy Matsue**
**2017 Speyer Lane**
**Redondo Beach California 90278(US)**

(74) Representative: **Allden, Thomas Stanley et al**
**A.A. THORNTON & CO. Northumberland House 303-306 High Holborn London WC1V 7LE(GB)**

---

**Description**

This invention relates generally to information processing systems, and more specifically, to special-purpose processors for searching data bases to locate particular patterns of data. This type of processing arises in a number of different contexts, but can be best understood in terms of a search of a data base to locate all the occurrences of a particular word or phrase. In the past, computer software has been used to perform such searching, but has been found to suffer from a number of practical limitations.

Conventional hardware for sequentially searching a large data base from beginning to end is likely to take so much time as to be totally impractical, and various software techniques have been used to organize the data in such a way that the system has relatively good performance for what is considered a typical search. These techniques usually involve some type of indexing scheme, in which large tables contain the location or locations of every item in the data base. These index tables may be comparable in size to the actual data base, and they are often cumbersome to build and organize. Moreover, a system that requires indexing tables is inconvenient to use for searching data bases of which the content may vary with time.

Even with the use of index structures, software searching is very much dependent on the number and complexity of search conditions imposed for a given search task, and the general-purpose computer employed has an operating system overhead that further slows the searching process. As a result, actual data processing rates that can be obtained are usually only a fraction of the maximum data rates of mass storage devices on which data bases are usually stored.

Because of the limitations of software-controlled searching techniques, hardware devices to aid in the searching process have been devised. These fall into two categories: content-addressable memories and special-purpose processors. Content-addressable memories are memory devices capable of comparing their contents with a pattern presented on a common bus. Such memories are prohibitively expensive for large data bases, and, in any event, have limited utility, since they are typically capable of performing only exact match operations.

Special-purpose processors for data searching employ low-cost memory from which data is accessed by dedicated pattern-matching circuitry. The search conditions are typically stored in the processor prior to the search, and data is fed into the processor during the search. A particularly desirable form of a special purpose processor incorporates all of is logic onto a single integrated-circuit chip, with an expansion capability based on the use of several interconnected chips.

One such processor, by Mead and associates at the California Institute of Technology, uses a 128-bit comparator to compare text input with a resident pattern. (See Mead, C.A. Pashley, R.D., Britton, L.D., Daimon, Y.T., and Sando, S.F. "128-bit Multi-Comparator," IEEE Journal Solid State Circuits, SC-11(5):692-695, October, 1976). A mask register allows the equivalent of variable-length "don't care" characters in the pattern. In other words, the pattern may be designated as containing a variable-length segment, the content of which does not affect the matching process.

Foster and Kung have proposed a systolic pattern-matching chip consisting of a plurality of serially connected cells. (See Foster, M.J., and Kung, H.T. "The Design of Special-Purpose VLSI Chips," IEEE Computer, 13(1), January, 1980, pages 26 - 40). The processor does not store the pattern being searched for. Instead the pattern is shifted along a path parallel to the shift register path for the data being searched but in opposite direction. However the possibility of an array of cells with data flowing in only one direction and of storing the pattern permanently in the cells with partial match results moving at half the speed of the data so that they accumulate results from an entire substring match is mentioned in an alternative algorithm. These results may be a single bit tolerance value or a count of how many items of the data string match the pattern string.

A second systolic design was proposed by Mukhopadhyay of the University of Central Florida with a structure including a pipeline of a single type of cell. (See Mukhopadhyay, A., "VLSI Hardware Algorithms," In Rabbat, G. (editor), Hardware and Software Concepts in VLSI, ch. 4, pp. 72-94, Van Nostrand Reinhold, 1983). In this system, a pattern is loaded in from one end of the pipeline and text data to be searched is loaded in from the opposite end. The system allows both fixed-length and variable-length "don't care" characters.

Even though these and other proposed systems perform pattern matching at high speeds with various "don't care" capabilities, they do not represent complete data search systems. For example, these systems do not perform Boolean functions, complex proximity functions, or handle approximate matches. Accordingly, a system built around such devices would have an unpredictable response time, depending on whether or not the special hardware could be used. This is, in many ways, the same problem that faces traditional software solutions.

A further prior art system, the operation which is described in terms of Boolean algebra, is described in GB-A-2156115. This has a plurality of serially connected cells which hold a search pattern in pattern registers. A test stream is passed through the cells, and the presence or not of a match with the search pattern is indicated on a match line formed by serially connecting a delay element of each cell. At each cell there is logic for clearing the match line in the absence of a match between the search pattern and the test stream.

However there is still a need for an improved special-purpose processor that can perform a variety of search functions, and can preferably be incorporated onto a single integrated-circuit chip. Ideally, the improved processor should be capable of searching a data base at a speed limited only by the rate at which the storage medium can be accessed, hence providing maximum possible throughput of data. The present invention is directed to these ends.

The present invention resides in an improved special-purpose processor, and a related method for its use, for high-performance data searching as claimed.

BRIEF DESCRIPTION OF THE DRAWINGS

FIGURE 1 is a block diagram of a fast search processor connected to a host system;
FIG. 2 is a block diagram showing a number of cells connected serially together;
FIG. 3 is a block diagram showing the structure of a single search processor cell;
FIG. 3a is a block diagram of an alternate form of the search processor cell;
FIG. 3b is an exemplary logic diagram showing further detail of one of the logic elements in FIG. 3;
FIG. 4 is a table showing a simple search sequence using the structure of the invention;
FIG. 5 is a match line diagram showing a simple search operation;
FIG. 6 is a match line diagram showing a simple logic OR operation;
FIG. 7 is a match line diagram showing a common-prefix OR operation;
FIG. 8 is a match line diagram showing use of a "negate" function;
FIG. 9 is a match line diagram showing use of a "right bracket" function; and
FIG. 10 is a block diagram showing the initialization logic for a search processor cell.

DESCRIPTION OF THE PREFERRED EMBODIMENTS

Overview:

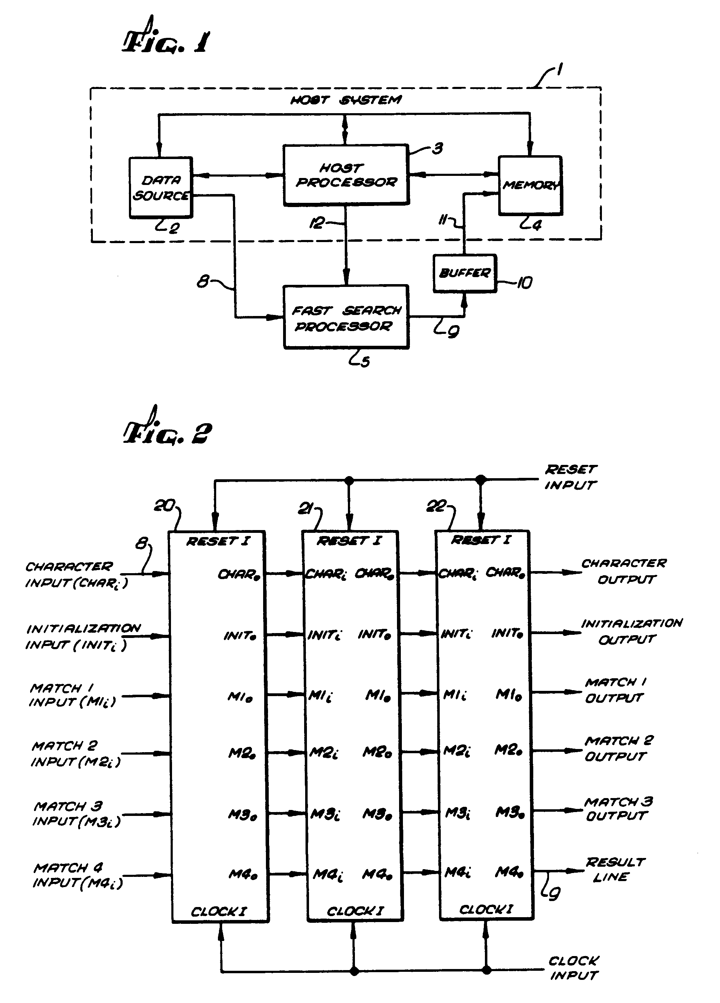

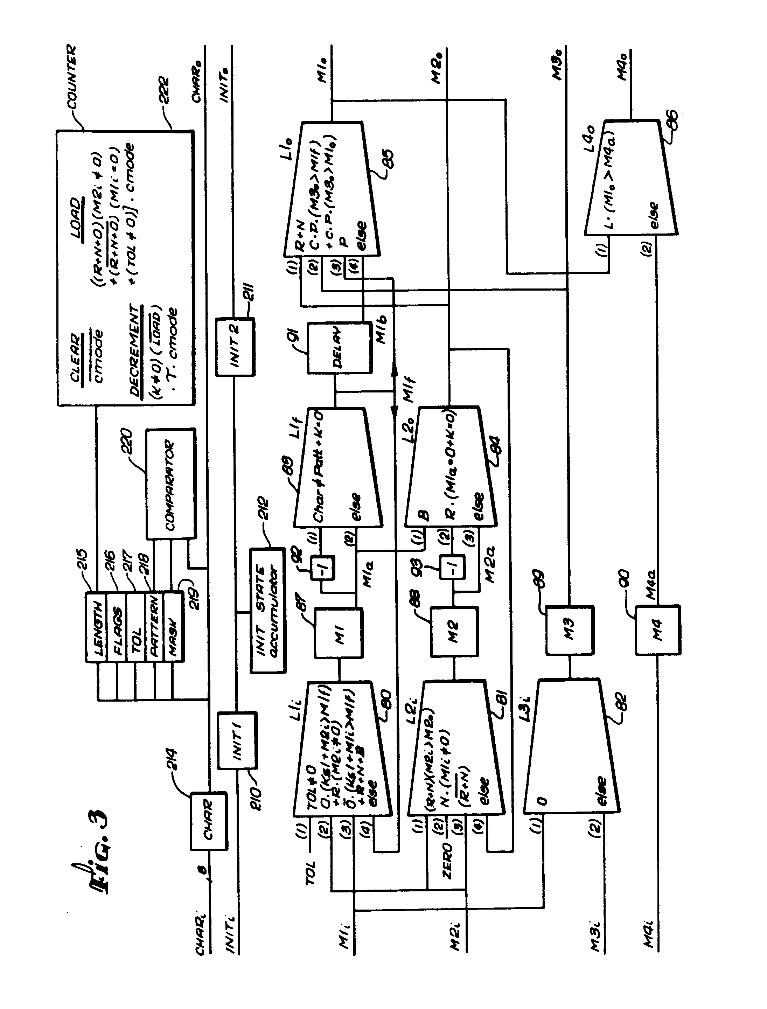

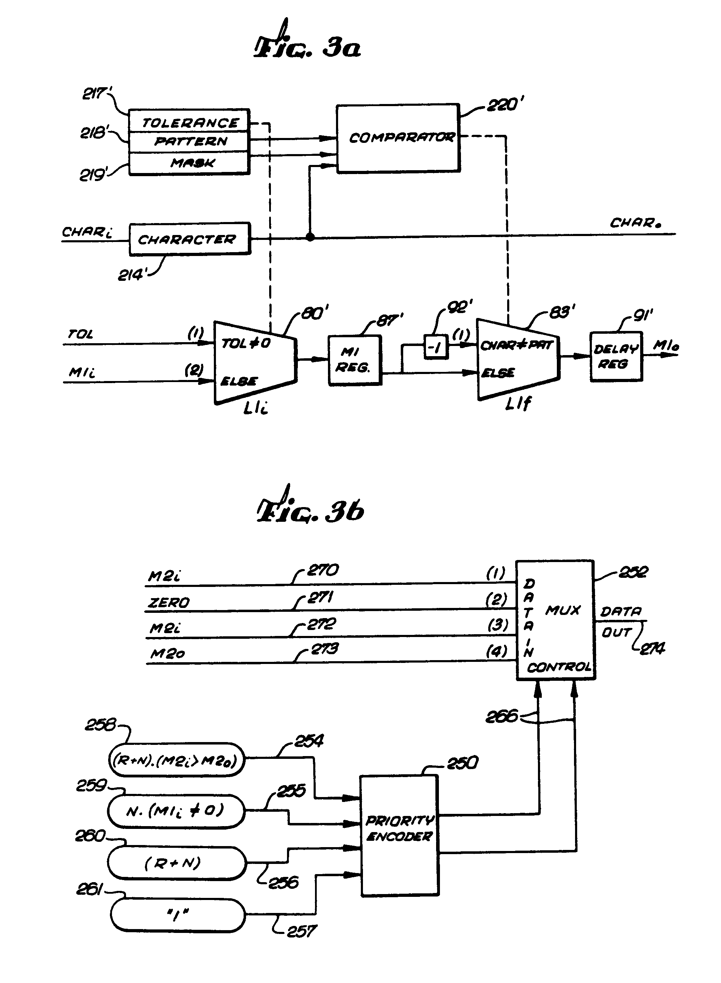

As shown in the drawings for purposes of illustration, the present invention is concerned with special-purpose processors for searching streams of data, such as from data bases. As shown in FIG. 1, the environment in which the present invention is used includes a host computer system, indicated by reference numeral 1. The host system 1 includes a data source 2, a host processor 3, and a result memory 4, and may have any appropriate detailed architecture. Typically, the data source 2 is a high-speed magnetic disk storage system, the host processor 3 is a conventional general-purpose processor, and the memory 4 is a conventional random access memory.

The fast search processor of the invention, indicated by reference numeral 5, receives data from the data source 2 over line 8, and transmits results over line 9 to an output buffer 10, and from there to the result memory 4, over a low-speed line 11. The search processor 5 is controlled in an initialization mode, in a search mode, and in a diagnostic mode, by signals received over line 12 from the host processor 3.

In the initialization mode, initial values are loaded into the search processor 5 over line 12. Then, in the search mode, the processor searches a data stream provided at high speed over line 8, and transmits match results at the same high speed over line 9 to the output buffer 10. A design goal of the search processor 5 is to be able to search the data stream at a speed comparable to the access rate of the data source 2. Large data bases can then be searched serially in a reasonable time, without the use of complex and costly indexing schemes.

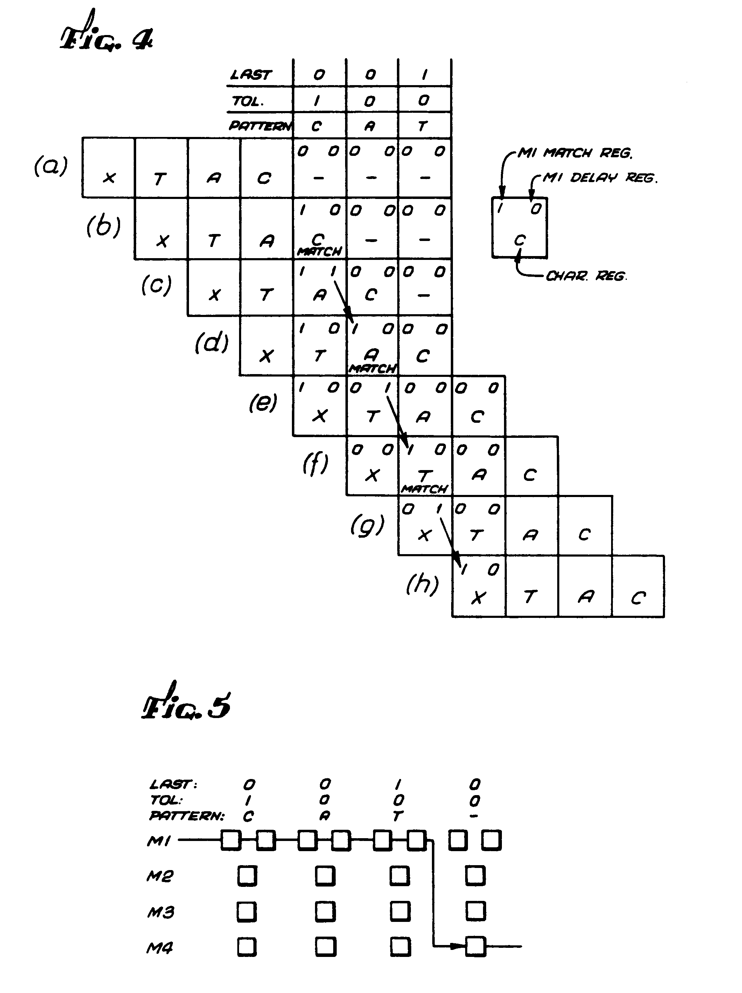

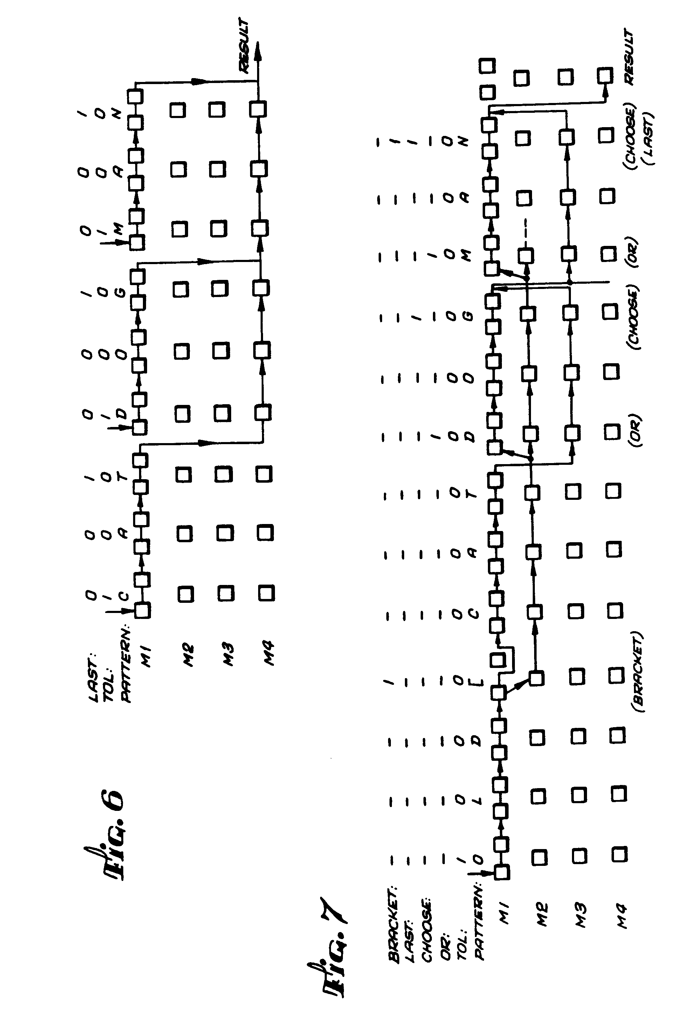

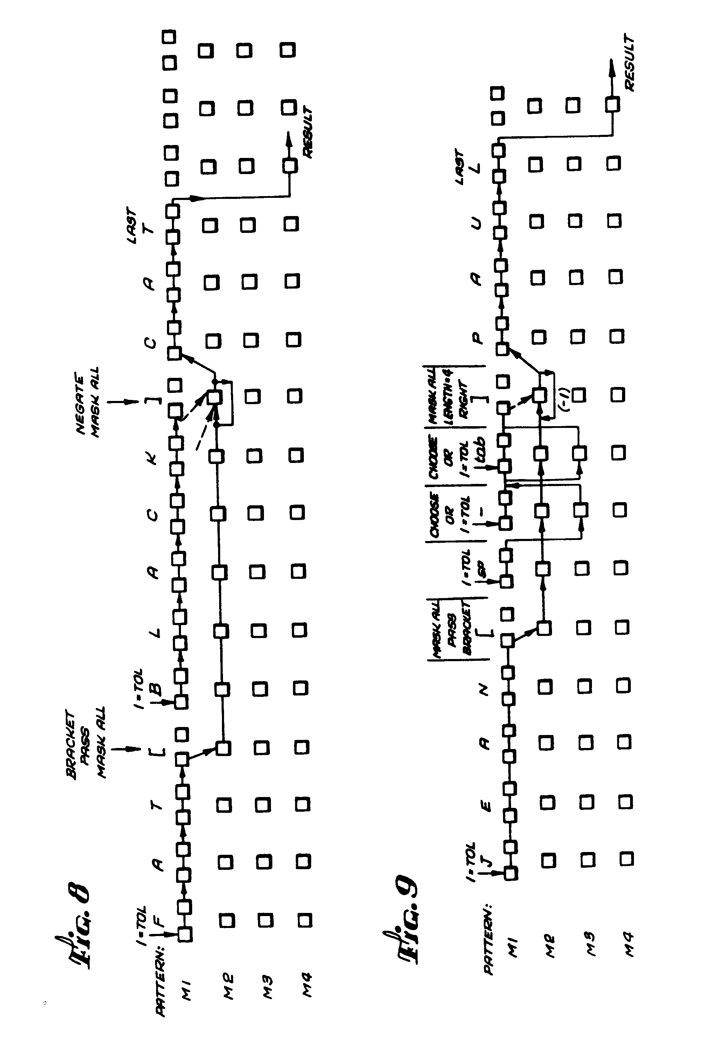

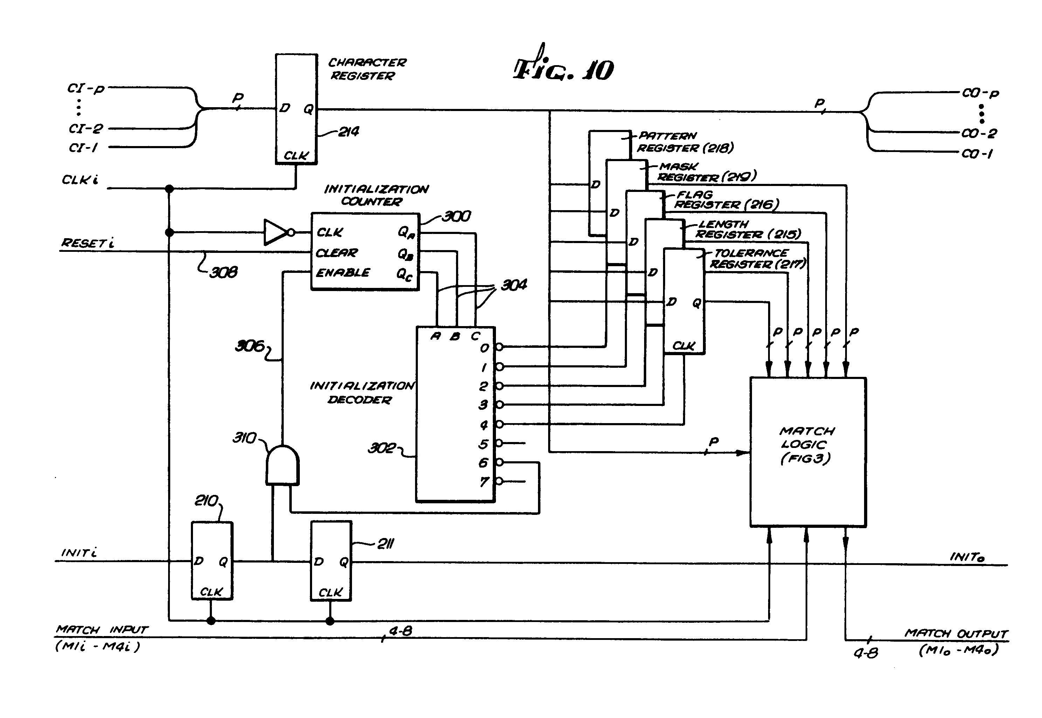

The search processor of the preferred embodiment of the invention comprises a multiplicity of identical cells, three of which are shown at 20-22 in FIG. 2. The structure of each cell will shortly be explained with reference to FIG. 3, but initially one need only understand that each cell contains a character of a pattern to be searched for, and has a character line (CHAR), an initialization line (INIT), and four match lines (M1-M4), each with an input and output. These lines are connected together serially from cell to cell. Characters in the data stream on line 8 are input to the character line of the first cell 20, and then, on subsequent clock cycles, are shifted through the remaining cells 21 and 22.

The first match line M1 is the line on which match results are principally propagated from cell to cell. The fourth match line M4 is used to carry a final match result, and the M4 output from the last cell 22 is the result line 9 in FIG. 1. The value on the match line M1 indicates a match by the presence of a non-zero value. A zero on the match line represents a non-match. Rather than carrying a simple binary match or non-match value, the match line can be employed in a more general sense to carry a tolerance value indicative of the degree of match. In the first cell of a pattern, this value is initialized to some positive integer, such as "3", whose value is the number of characters of the stored pattern which, if different from the corresponding characters of a character sequence in the data stream, will cause the processor to declare that the character sequence does not match the pattern. If this tolerance value emerges on the result line 9 without change, there is a perfect match. A one-character error, (i.e., discrepancy) between the data stream and the stored pattern would result in a "2" value at the output line 9, and so forth. An "0" value at the output line 9 would indicate "no match" because of a 3-or-more-character error between the data stream and the stored pattern.

Operation of the cells is in accordance with a relatively straightforward logical sequence, which is identical from cell to cell. At each clock cycle, and in each cell, the character currently in the cell is compared to a pattern character previously stored in the cell. By way of example, the letters C-A-T are assumed to be the pattern characters stored in cells 20-22, respectively. If the characters CAT were to appear in the input data stream, the incoming C would match with the pattern C in the first cell 20. As the character C passes to the second cell 21, it is followed, on match line M1, by a tolerance value indicative of a match in the first cell. More precisely, the indication of a match propagates to the second cell concurrent with the next data character following the matching one. Two clock cycles after the match of C characters, the incoming A character is introduced to the second cell 21 and a match is found with the pattern character A in that cell. The architecture of the individual cells is such that the tolerance value emerging on match line M1 from the first cell 20 will be passed through the second cell 21 if a match is found in that cell also. Similarly, when the incoming T character is found to match the pattern stored in the third cell 22, the tolerance value on match line M1 emerges from the third cell. In this example, the third cell is the last one in the pattern and, as will be explained, contains a "last" flag that has the effect of transferring the tolerance value from match line M1 to match line M4, from which it emerges on result line 9 to indicate a perfect match. How this comparison function is performed will become apparent from the following description of alternate structural embodiments of a single cell.

Cell Structure with Single Match Line:

The simplest form of the cell structure includes only a single match line M1, as shown in FIG. 3a. The match line is employed to carry a tolerance value of two or more, to represent a degree of mismatch to be tolerated. An initial tolerance value is decremented at each cell position in which a mismatch is detected, and emerges from the search processor to provide an indication of the degree of match between the search pattern and a string of characters in the data stream being searched.

In this description, the subscript "i" refers to an input signal, as in $M1_i$, and the subscript "o" refers to the output signal, as in $M1_o$. Each of the logic elements 80' and 83' is a priority multiplexer, having multiple inputs, designated by numbers in parentheses, and a single output. The operation of each logic element is that the output is chosen from the input whose associated input logic condition is true. The logic conditions are set forth in abbreviated form in the logic boxes. If more than one input logic condition is true at the same time, the uppermost input, i.e. the one with the lowest input line number, is chosen as the output. The operation of these logic elements will shortly become clear.

The cell includes a tolerance register 217', a pattern register 218', a mask register 219', a character register 214', and a comparator 220'. The single match line includes an input logic element 80', an M1 match register 87', a second logic element 83', a decrementing circuit 92', and a delay register 91'.

The input logic element 80' has only two inputs: one from the tolerance register, if the register contains a non-zero value, and the M1 input line $M1_i$. The match register 87' is loaded with the $M1_i$ value only if the tolerance register contains a zero value. Logic element 83' operates to decrement the tolerance value if there is no match between the pattern and character registers. The delay register 91' is necessary for timing purposes, as will become clear from the following simple search example. Initialization of the alternative cell structure is performed in a manner to be subsequently described in this specification.

In FIG. 3a, the output of the tolerance register 217' and the comparator 220' are shown as connected to logic elements 80' and 83', respectively, by broken lines. This is because these outputs connect to logic circuitry internal to logic elements 80' and 83' but not shown in FIG. 3a, which implement the logical expressions within the elements. In other words, the contents of the tolerance register and the output of the comparator are transmitted to the logic elements 80' and 83' and are used to control selection of inputs to those elements.

4

Simple Search Function:

The simple search can be made with the use of only the single match line M1 of FIG. 3a. The mechanics of the search can best be explained in terms of a specific example, shown in FIG. 4. Three consecutive cells, indicated as $c_1$, $c_2$ and $c_3$, are initialized with a pattern to be searched for in the incoming data stream. In the example, the search pattern is the word CAT. The pattern registers 218 of the cells contain the letters C, A and T, respectively. The length registers 215, the flags 216 and the mask register 219 are not used in the example. The tolerance register for the first cell (the $c_1$ cell) is loaded with a desired match tolerance. In the example, this is assumed to be a "1", meaning that a perfect match is desired. The tolerance registers of the other cells are set to zero. It will be noted that the tolerance register value will be introduced into the M1 match line, through input (1) of logic element 80', only if the value is non-zero. Accordingly, a tolerance value of "1" will be introduced into the M1 register of the first cell each time a new character is clocked into the cell.

After initialization, the cells have the following contents:

|  | $c_1$ | $c_2$ | $c_3$ |
|---|---|---|---|
| Pattern | C | A | T |
| Mask | U | U | U |
| Tolerance | 1 | 0 | 0 |
| Last Flag | 0 | 0 | 1 |

The mask flag has a certain bit set to force a match regardless of whether upper or lower case characters appear in the date. This is indicated by the letter U.

The key to the matching process is in the role played by the $L1_f$ logic element 83' and the delay register 91'. If there is no match between the character register 214 and the pattern register 218', input (1) is chosen in this logic element, and the tolerance value is decremented to zero in the decrementing circuit 92'. (The decrementing circuit 92' is designed not to decrement the tolerance value below zero.) Thus, a non-match in any cell will result in zeroing of the tolerance value in the M1 match line. When a match is found, however, input (2) is selected in the $L1_f$ logic element 83', and the tolerance value is not decremented.

If a letter C is input to the first cell $c_1$, a match will be found and a tolerance value of "1" will be passed to the delay register 91'. The purpose of the delay register 91' is to synchronize the propagation rate of the tolerance value on the M1 match line with that of the data on the character line. For a search pattern of n characters, it will take 2n clock cycles for an n-character sequence within the data stream to pass completely across the search pattern. Therefore, to provide a match result out of the processor when the last data stream character is emerging requires that the M1 match line values progress along the line at half the character clocking rate. The delay register at each cell position takes care of this timing difference. Another way to appreciate the need for the delay is to consider the number of clock cycles that must occur between the matching of two adjacent characters. After the matching of the C's in cell $c_1$, shown in line (b) of FIG. 4, two clock cycles must occur before the A's are aligned for match detection cell $c_2$, as shown in line (d).

In line (a) of FIG. 4, the letters CATX are shown as approaching the search pattern. The two numerals in each cell represent the tolerance values at the M1 register and the delay register, respectively. These are initially all zero. In line (b), the letter C has advanced to the first cell $c_1$ and a "1" has been introduced into the M1 register. In line (c), the letter C has advanced to the second cell $c_2$ and the letter A as in the first cell $c_1$. Since there was a match in the previous line in the first cell $c_1$, a "1" tolerance value will advance to the delay register in this cell. On the next clock cycle, as shown on line (d), the "1" form the delay register of the first cell is shifted into the M1 register of the second cell $c_2$, where the data character A is aligned with the A of the search pattern. On the next cycle, on line (e), the "1" is advanced to the delay register of the second cell $c_2$, since there was previously a match in that cell. In the next cycle, on line (f), the "1" is propagated to the M1 register of the third cell $c_3$, where the T characters now match. In line (g), the "1" moves to the delay register of the third cell $c_3$, because of the previous match in that cell. The final step is shown in line (h), in which the tolerance value of "1" emerges from the search pattern with the letter X, which immediately follows the pattern located in the data stream. It will be seen that the tolerance value will propagate across the search pattern of cells only if a match has been detected in each successive cell of the pattern.

If the tolerance value higher than "1" were introduced in the first character of the search pattern, one or more errors could then be tolerated in the data stream. For example, if a tolerance value of "3" were used, CAT would produce a result of "3", COT a result of "2", and COP a result of "1". Each error decrements the tolerance value by "1". In a three-letter pattern, all three letters would have to be in error to reduce the tolerance value to zero.

Although this simple search can be performed as described, using a single match line, a more powerful search processor results when multiple match lines are employed. The following section describes the cell structure of such a processor.

Multiple Match Lines - Overview:

Although the simple search described operates at high speed as desired, it is somewhat limited in terms of the types of searches that can be made. For example, a simple OR search, such as CAT or DOG, would require two passes of the data stream if the simple search technique were to be employed.

In accordance with a further aspect of the invention, multiple match lines are employed to provide the search processor with extended capabilities. Second and third search lines are used principally as registers for the temporary storage of match results. For this usage of multiple match lines, a number of manipulative functions are needed for the match lines, to enable splitting of a line, exchanging positions of lines, combining lines, and so forth. These basic functions are controlled by flags stored in a flag register in each cell, as explained in the following sub-sections.

Cell Structure with Multiple Match Lines:

Each cell, as shown in FIG. 3, includes seven logic blocks indicated by numerals 80-86, the function of which will be explained as the description proceeds, four match registers 87-90, a delay register 91, and two decrementing circuits 92 and 93.

As in the description of FIG. 3a, the subscript "i" refers to an input signal, as in $M1_i$, and the subscript "o" refers to an output signal, as in $M1_o$. The subscripts "a" and "b" refer to intermediate signals, between input and output. Each of the logic elements 80-86 is a priority multiplexer having multiple inputs, designated by numbers in parentheses, and a single output. The convention for each logic element is that the output is chosen from the input whose associated input logic condition is true. The logic conditions are set forth in abbreviated form in the logic boxes. If more than one input logic condition is true at the same time, the uppermost input, i.e. the one with the lowest input line number, is chosen as the output. The operation of these logic elements will shortly become clear.

The first match input line $M1_i$ is connected to input (3) of logic element 80, which is also designated $L1_i$. The output of this element passes to the M1 match register 87, from which two possible inputs to logic element 83 are derived. Input (1) to logic element 83 is derived by decrementing the M1 register value, in circuit 92, and input (2) is derived directly from the M1 register 87. The output of logic element 83, also designated $L1_f$, passes through the delay register 91 and thence to logic element 85 ($L1_o$) as input (4). The output of logic element 85 is the first match line output $M1_o$. Alternate paths for the first match line are a feedback path from the output of logic element 83 to input (4) of the logic element $L1_i$ 80, and a path that bypasses the delay 91, extending from the output of logic element 83 to input (3) of logic element $L1_o$ 85.

The input for the second match line $M2_i$ is connected to inputs (1) and (3) of logic element 81, and as input (2) of logic element 80. The output of logic element 81, also designated $L2_i$, is connected to the M2 match register 88, and thence to input (3) of logic element 84 (directly) and to input (2) of the same element (through decrementing circuit 93). The output of logic element 84, also known as $L2_o$, is the second match line output signal $M2_o$, which is also fed back to input (4) of the input logic element $L2_i$ 81. Input (2) of element $L2_i$ is a forced zero value, and input (1) of logic element $L2_o$ 84 is derived from a value $M1_a$ output from the M1 match register 87.

By way of example, FIG. 3b shows the $L2_i$ logic element 81 in more detail. Basically, the logic element includes a priority encoder 250 and a multiplexer 252. The encoder 250 has four inputs, on lines 254-257, which derive their binary inputs from the logical expressions shown in the respective blocks 258-261. When an expression in one of the blocks is true, a "1" input signal is generated on the corresponding input line. If only one of the inputs is a "1," its position is converted by the encoder 250 to an address signal output on lines 266 to the multiplexer 252. If more than one input is a "1," the priority encoder 250 selects the input line nearest the top of the block, i.e., the line with lowest reference numeral. The multiplexer 252 operates in a conventional manner and converts the address on lines 266 to a 1-in-4 internal selection signal, which is used to select one of four input lines 270-273 for output from the multiplexer./ The other logic elements in FIG. 3 operate in substantiallly the same way.

The third match line input $M3_i$ is connected to input (2) of logic element 82, also known as $L3_i$, input (1) being derived from the $M1_i$ signal. The output of logic element $M3_i$ is connected to the M3 match register 89, and thence to the output line $M3_o$.

The fourth match line input $M4_i$ is connected as the only input to the M4 match register 90, the output of which is connected as input (2) to the logic element 86, also known as $L4_o$. Input (1) to the logic element $L4_o$ is derived from the first match line output $M1_o$, and the output is the fourth match line output $M4_o$.

The cell structure also includes first and second initialization registers 210 and 211. An input initialization line $INIT_i$ is coupled to the first initialization register 210, the output of which is coupled to the second register 211, from which an output initialization line $INIT_o$ is derived. An initialization state accumulator 212 is connected to the line between the registers 210 and 211.

The character input line, designated $CHAR_i$, provides the input to a character register 214. A number of other storage registers are shown as connected to the character line, since their values are initialized through the character line. These are the length register 215, the flag register 216, the tolerance register 217, the pattern register 218 and the mask register 219. A comparator 220 receives data from the pattern register 218, the character line and the mask register 219. Basically, the comparator 220 compares the data in the character register 214 with the data in the pattern register 218, in conjunction with a mask stored in the mask register 219. The only element of the cell yet to be discussed is the counter logic 222. This operates in conjunction with the length register 215 and certain flags in the flag register 216, to control an internal counter used in searching functions.

All of the searching functions and conditions can be understood by reference to the basic cell diagram of FIG. 3. The specific flags in the flag register 216 will be introduced as particular functions are described.

It will be understood from the foregoing description that the simple search function described with reference to FIG. 3a can be preformed in the same manner using the cell structure of FIG. 3. The only difference is that the processor using multiple match lines makes use of the M4 match line as a result line. When the last flag is set in a cell, usually the last cell in a search pattern, the tolerance value on the M1 line is transferred to the M4 line. This is shown in FIG. 5 which is a match line diagram showing in diagrammatic form how tolerance values are propagated through the interconnected cells. As shown, the tolerance value propagates along the M1 match line until cell $c_3$ is reached. Then the presence of the last flag causes transfer of the tolerance value to the M4 match line. In FIG. 3, this is the path through input (1) of the $L4_o$ logic 86. It should also be understood that one can employ the same cell structure without the use of tolerance values. In this special case, the tolerance values are always initially unity. The first decrementing action on a tolerance value effectively clears it to zero, indicating a non-match.

The Flags:

The following is a list of the flags, which are one-bit fields within the flag register 216 of each cell:

P Pass flag
B Bracket flag
O OR flag
C Choose flag
R Right flag
N Negate flag
I Infinite flag
L Last flag

The flags used in a simple OR search will be explained first. The remaining flags will be discussed later.

The Bracket Flag:

The bracket flag effects a splitting or branching of the M1 match line. A dedicated cell is needed to perform this function. In other words, no pattern character can be stored in a cell with the bracket flag set. Its effect is to transfer the output of the M1 match register (the $M1_a$ output) to the M2 output line of $M2_o$ of the same cell. On the M2 match line, any value loaded into the M2 register from the $M2_i$ input lines will be ignored when the bracket flag is set. The effect of the bracket flag can be appreciated in FIG. 3, which shows the $M1_a$ output as providing input (1) to the $L2_o$ logic element 84.

The Pass Flag:

The pass flag is set in a cell in which there is a need to bypass the delay register 91 in the M1 match line. Normally, it is desired that the tolerance value in the M1 match line should propagate from cell to cell at half the rate of character propagation. However, there are exceptions that require the delay to be bypassed in some cells.

One exception is in a special-purpose cell, such as one in which the bracket flag is set and no pattern-matching function is performed. Another use of the bypass flag is in the last character of a pattern. If the bypass flag is set in this cell, the result will emerge with the last character of the pattern, rather than with the next subsequent character, and this may be more convenient for some applications. Yet another use of the pass flag is in conjunction with variable-length "don't care" operations, to be discussed.

The Tolerance Register:

The tolerance register 217 is not a flag; it is another register separate from the flag resistor. It is initialized with a positive integer indicating the maximum mismatch that will be tolerated in a pattern search. The tolerance value is typically set only for the first character of a pattern of interest. The tolerance register value, if non-zero, is loaded into the M1 match register 87, as indicated by input (1) of $L1_i$ logic element 80. If the tolerance register contains zero, as will be the case for most cells of the pattern, the input for the M1 match register is usually derived from the M1 input match line $M1_i$.

The Last Flag:

The last flag is set in the last character of a pattern to be searched for. In a cell in which the last flag is set, the values in the M1 delay register 91 and the M4 match register 90 are compared, and the larger one is placed on the M4 output line $M4_o$. This is apparent from FIG. 3, in which the $L4_o$ logic element 86 has its first input (1) derived from $M1_o$ if the last flag is set and $M1_o > M4_a$, $M4_a$ being the output from the M4 match register 90. As will now be discussed, the function of the last flag is also used in logical OR operations.

The Basic OR Search:

The basic OR search has as its goal the location of two or more alternative patterns in the data stream being searched. For example, one may wish to locate the occurrences of the words CAT or DOG or MAN. A simple search using only one match line would require three passes through the entire data stream to perform the OR function. In the present invention, the OR search is made using match line M4 in conjunction with the tolerance register 217 and the last flag.

As shown in FIG. 6, the first pattern, CAT appears in the cells in a normal manner. The C character sets the tolerance register to a desired value, and the last character, T, has the last flag set. Thus, the result of the CAT match, if any, is transferred to the M4 match line. It will be recalled that a match result emerges from the last cell of a pattern with the character following the last matching character of the data stream being searched. If the letter following CAT is assumed to be X, for example, then the match result will emerge from the T cell as the X character emerges from the character register of the T cell. Since the M4 match line has only one register, the match value will propagate along the M4 match line in synchronism with the X character of the data stream.

Since a logical OR function is required, it is important that any match result from the CAT pattern not be associated with the search for the DOG pattern. This requires that the first letter of the DOG pattern should reset the tolerance value to a selected value, regardless of whether or not there was a match in the first pattern. Therefore, the D character of DOG and the M character of MAN have their tolerance registers initialized at a desired value. The last cell, G, of the DOG pattern also has its last flag set, causing the result of the DOG search to be transferred to the M4 match line. In most OR searches, this will not cause any conflict in results on the M4 match line, since the result from the CAT search will have propagated out of the processor by the time the result of the DOG search reaches the M4 line. In other words, the results of the CAT and DOG searches will emerge from the processor at different times.

To allow for the possibility that some search configurations would cause a conflict between a search result on the M4 line and a search result about to be transferred to the M4 line, the last-flag logic selects the larger match value for the output on the M4 line. This is shown in the input logic for input (1) of logic element 86 ($L4_o$). Such a conflict between results on the M4 line would occur only when two ORed search patterns were of equal length and were almost identical, within the tolerance selected for the search. For example, a search for DOG or LOG with a tolerance of two or more would result in both OR paths detecting a match when DOG appeared in the data stream. DOG would match exactly and LOG would match with a lower tolerance but both match results would compete for the $M4_o$ line and the larger tolerance would be selected.

The addition of the third search pattern, MAN, is treated in identical fashion. The M character of the pattern resets the tolerance value for the search, and the N character of the pattern has its last flag set, to transfer any match result to the M4 line.

The OR Flag:

The OR flag affects three match lines: M1, M2, and M3. When a clock pulse occurs in a cell with the OR flag set, the M2 input value, on line $M2_i$, is loaded into the M1 match register 87, and the M1 input value, on line $M1_i$, is loaded into the M3 match register 89. These signal paths may be readily observed in FIG. 3, in which the (1) input to the $L3_i$ logic element 82 is derived from $M1_i$ when the OR flag is set, and the $M2_i$ value is selected for input to the M1 match register when the OR flag is set and certain other logical conditions are true. When used subsequent to a bracket flag, the OR flag permits retrieval of a previous result saved in the M2 match line, and at the same time saves the current M1 match result in the M3 match line. The practical importance of the OR flag will become apparent from examples to be described after the choose flag has been introduced.

The Choose Flag:

The choose flag affects the output of the first match line, on line $M1_o$. On each clock pulse in a cell in which the choose flag is set, the values in the M3 match register 88 and the M1 delay register 91 are compared, and the larger value is output on the $M1_o$ output line. This choice is made at input (2) of the $L1_o$ logic element 85. If the pass flag is set as well as the OR flag, the M3 delay register 91 is bypassed and the comparison is made between M3 and the output from the M1 match register 87, on line $M1_f$.

Common-Prefix OR Search:

The common-prefix OR search is an OR search in which each of the alternative patterns has a common prefix pattern. For example, suppose one wished to locate the occurrence of OLD CAT or OLD DOG or OLD MAN. While this may seem trivial, for longer search patterns it would be desirable not to have to repeat the prefix several times in the search pattern. The common-prefix search solves this problem by means of the bracket, OR and choose flags, as shown in FIG. 7.

The common-prefix pattern, OLD, appears first in the search pattern, and the result of the prefix search appears on the M1 match line in the same manner as in a simple search. The next cell after the prefix is a bracket cell, having both the bracket flag and the pass flag set. As will be recalled, this splits the M1 tolerance value and places it on the M2 line as well as on the M1 line of subsequent cells. In the next segment of the search pattern, the first suffix pattern, CAT, is searched for, so that the last cell (T) in this segment will produce a result indicative of the OLD CAT search. The first cell of the next segment of the search pattern, the D cell, has the OR flag set, and this results in saving the OLD CAT result in the M3 match line and retrieving the prefix search result (OLD) from the M2 match line.

The third segment of the search effects a search for OLD DOG, while propagating the OLD search result through the M2 match line and propagating the OLD CAT search result through the M3 search line. The last letter of the third segment, the G cell, has its choose flag set. In the general case, this effects a choice of the larger of the M3 value and the M1 value. In most practical situations, however, there will be no conflict between the M3 and M1 values. If a match had been found for OLD CAT, by the time a subsequent match had been found for OLD DOG the OLD CAT match value would have been propagated out of the processor. The choose function either takes the OLD CAT match value from M3 or the OLD DOG match value already on M1 and outputs it on the $M1_o$ line.

The fourth segment of the search pattern functions in a similar way to the third. The first cell, the M cell, has its OR Flag set, to save the M1 match value in M3 again, and to retrieve the prefix match value from M2. In the fourth segment, matching proceeds for the OLD MAN pattern, and in the N cell the choose flag again effects a choice between the OLD MAN match value on the M1 line and a possible OLD CAT or OLD DOG match on line M3. Again there is little possibility of two simultaneous matches of the alternative patterns, unless the patterns are of equal length and nearly similar content.

In this discussion, the space between the prefix and possible suffixes of the search patterns has been ignored. One simple way to handle this is to consider the space as part of the common prefix. Another solution is to invoke the "don't care" function, to be discussed, and to ignore the imbedded space in the search pattern.

## "Don't Care" Character Strings:

There is a common search requirement to ignore strings of characters imbedded in a search pattern. The characters to be ignored are frequently referred to as "don't care" characters. Two cases of interest are the fixed-length don't care and the variable-length don't care strings.

Fixed-length don't care situations are easy to handle using the mask register 219 of selected cells. For example, if one wished to search for a particular date, but the day of the month was not critical, the search pattern might be: MARCH XX, 1972, where XX denote don't-care characters. The search could be implemented by setting all bits of the mask register in the two cells of the search pattern corresponding to the day of the month. Bit positions of the character register corresponding to the set positions of the mask register are ignored in the comparison process. If all bits of the mask register are set, a match in that cell is assured, regardless of the content of the character register.

The variable-length don't care function is effected by means of a special cell with the mask register bits all set, operating in conjunction with the counter and length register 215 in the same cell. The "don't care" cell is placed in the search pattern at the position at which a variable-length don't care string is permitted. Suppose, for example, one wishes to search for "MARCH" within ten characters preceding "1972". The search pattern will be MARCH*1972, where the asterisk represents the "don't care" cell. The * cell has its length counter initialized to a value corresponding to the don't- care count of ten.

After the pattern for MARCH has been matched in the data stream, a non-zero tolerance value on the M1 match line will have the effect of loading the counter with the value stored in the length register, in this case ten. This is apparent from the second load condition for the counter set forth in FIG. 3. Subsequent characters, up to ten, passing through the "don't care" cell will result in decrementing the counter. Meanwhile, the M1 match result from the match of the pattern MARCH will be recirculated within the cell itself. The mechanism for this recirculation is a feedback signal $M1_f$ from the output of logic unit 83 to input (4) of the $L1_i$ logic element. The action of the * cell is, therefore, to transmit this recirculated match value on the $M1_o$ line up to ten times. If the next following character does not match the "1" in the second part of the pattern (1972), the match value will be decremented in the usual way and a match result may not emerge from the end of the pattern. If the string 1972 follows the string MARCH within the designated ten characters, then one of ten match values output by the * cell will be propagated all the way through the search pattern, indicating a match within the don't-care range that was specified.

A variation of the variable-length don't-care search is obtained by setting the pass flag in the don't-care cell. This permits a zero-length don't-care between the two search patterns. That is to say, the number of don't-care characters may be from zero to a selected count, rather than from one to the selected count.

A related search condition is the "variable-length care" condition, in which a specific character may occur repeatedly in a character string. For example, one may wish to find the words FAT and CAT separated by up to five spaces. In this case, the search pattern is FAT CAT, with the fourth cell containing a space character and not having its pass flag set. The length register in this cell is initialized to a value of five, and this value is loaded into the counter when a match is found in the first part of the pattern (FAT). The match value from the first part of the pattern is recirculated five times while the counter is being decremented, so long as spaces appear between the words FAT and CAT. If the second part of the pattern (CAT) appears within five spaces of the first part, one of these circulated match values will be propagated completely through the pattern if the second part of the pattern is detected.

This type of search, i.e. variable-length care, cannot be implemented down to a zero-length. Zero-length would imply a "don't-care" situation, whereas the "care" search requires a specific character to be located. Accordingly, the pass flag cannot be set for this type of search.

## The Negate Flag:

The negate flag has the effect of: (1) repeatedly outputting the value in the M2 match register on the M1 output line $M1_o$, and (2) if the incoming value on the M2 input line $M2_i$ is greater than the previous value $M2_o$ loading the incoming $M2_i$ value in the M2 match register. If the incoming $M2_i$ value is not greater than the previous value, M2 will either be retained as it was or will be zeroed, depending on whether $M1_i$ is zero or non-zero. The implications of these alternative actions will become clear from the example depicted in FIG. 8.

The negate flag is used to create patterns that will be considered to match if certain strings are not present in the incoming data stream. For example, if one wishes to find the words FAT CAT but without the

10

word BLACK between them. In other words FAT BLACK CAT would not be a match, but FAT WHITE CAT would be. The search pattern is FAT[BLACKnCAT, where [ is a cell with its bracket flag set and n is a cell with its negate flag set.

If the first pattern segment (FAT) is located in the data stream, the match value is passed to the M2 match line by action of the bracket flag, and is also retained in the M1 match line. However, the tolerance value is reset in the first cell of second segment (BLACK). Therefore, at the end of the second pattern segment (BLACK), the M1 match line will carry an indication of whether or not the pattern BLACK was found in the data stream. The $M2_i$ incoming match line will indicate whether a match for the first pattern segment (FAT) was found. When $M2_i$ is greater than its previous value, a match is indicated and M2 match register is loaded. This loading step is through input (1) of the $L2_i$ logic element 81. So long as BLACK has not been found, the negate cell continues to recirculate the value in its M2 match register, and to transfer this value back to the M1 match line. Transfer back to the M1 match line is made through input (1) of the $L1_o$ logic unit 85. Recirculation of the M2 value is made through input (4) of the $L2_i$ logic element 81. If a match is then found for the third segment (CAT), a non-zero match value will emerge from the processor in the usual manner.

If a match is found for BLACK, a non-zero match value is presented to the negate cell in its $M1_i$ line, and this results in a zero value being placed on the M2 match register. This operation takes place as a result of the zero connected to input (2) of the $L2_i$ logic element 81. The zero match value is also transferred to the M1 match line in the negate cell, and no match can then be found for the entire pattern, regardless of whether or not the last segment matches.

In summary, then, the negate logic functions principally as a result of the configuration of the $L2_i$ logic element 81. Input (1) is selected when the M2 register is first loaded in the negate cell, input (2) is selected when a match of the unwanted pattern segment is located, and input (4) is selected when the M2 value is recirculated. It will be understood that the last cell in any search pattern should have its last flag set, to transfer the final result of the search to the M4 result line.

The Right Flag:

The right flag works in conjunction with the length counter and performs a function similar in some respects to that of the negate flag. If the incoming value $M2_i$ on the M2 match line is non-zero, it is loaded into the M1 match register. This is effected through input (2) of the $L2_i$ logic element 80. If the value in the M1 match register is zero, or if the length counter has reached zero, the value loaded into the M2 match register is decremented by one and is output on the $M1_o$ output line. Otherwise, i.e. if M1 is not zero and the counter is not zero, then the value loaded into the M2 match register is output directly onto the $M1_o$ output line. The value output from M2 to the $M1_o$ output line is also recirculated to the M2 match register, through input (4) of the $L2_i$ logic element 81.

The incoming value on the $M2_i$ line is loaded into the M2 match register only if it is greater than the previous M2 value ($M2_o$). This is accomplished by input (1) of the $L2_i$ logic element 81, and is similar in operation to the negate flag.

The right flag provides a method for extending the concept of a variable-length care string in the search pattern, to allow a variable mix of several different specific characters, as the example shown in FIG. 9 illustrates. Suppose that the search pattern includes the name JEAN-PAUL. It is concluded that the hyphen may be replaced by a space, or a tab character, or some combination of these. Accordingly, the ideal search pattern would find a match if the data stream included any combination, up to a specified count, of several specified characters; for example, any five characters including hyphens, spaces and tabs, but no other characters. The right flag permits this function to be performed.

The search pattern stored is JEAN[ -t]PAUL, where [ is a cell with the bracket flag set, t is a tab character, and ] is a cell with the right flag set. The first segment of the pattern (JEAN) generates a match value in the M1 match line in the normal manner. Then the bracket cell copies this value in the M2 match line. For the next cells, following the bracket, the tolerance register is set to one, so the search for the characters following the bracket requires an exact match of one of the selected characters between the bracket and the cell with its right flag set. The cell containing the hyphen has both the OR flag and the choose flag set. The OR flag results in the $M1_i$ value being transferred to M3 and the $M2_i$ value being copied to M1. Then the choose flag in the same cell chooses the larger of the M3 and M1 values. The next cell, containing the tab character, also has its OR and choose flags set and operates in the same manner as the preceding cell. Up to this point, the search pattern is quite similar to the one used in a common-prefix logical OR search. A non-zero output will be generated on the M1 match line if any one of the three characters is detected.

The next cell, with the right flag set, may be thought of as a "closing bracket." If the input on the $M2_i$ line is non-zero, indicating a prefix match, the counter is loaded with the length register value. If the $M1_i$ line also indicates a match, meaning that one of the three designated characters followed the prefix, then the M2 match value is recirculated and is also transferred to the M1 match line for use in matching the suffix pattern segment. If the $M1_i$ indicates no match, i.e. that a character other than one of the specified three followed the prefix, then the M2 value is decremented by one, recirculated, and also transferred to the M1 match line.

So long as each character following the first pattern segment is one of the designated charac ters, and the number of such following characters does not exceed the designated count, then the cell with the right flag will continue to generate a match indicator. If a different character is interposed in the stream, or if the count is decremented to zero, the tolerance value will be decremented and the cell output may indicate a non-match.

Operations involving the right flag may also be better understood by tracing the relevant portions of logic in FIG. 3. Counter loading is initiated by the first load condition in the counter logic. The transfer of non-zero M2 tolerance value back to the M1 match line in a right-flag cell, is effected by input (2) of the $L1_i$ logic element, which is the selected input when $M2_i$ is non-zero.

After the counter has been loaded, the $M1_i$ line should normally return to zero, and the counter will be decremented on each cycle. The M1 register will then derive its input from the $M1_i$ line rather than the $M2_i$, as indicated by input (3) of the $L1_i$ logic element.

In the right-flag cell, the M2 match output, on line $M2_o$ is always transferred to the $M1_o$ line, through input (1) of the $L1_o$ logic element 85. The value of the output transferred is determined by the condition of the M1 match register 87 ($M1_a$) and by the condition of the counter. If $M1_a$ or the counter is zero, this indicates that either there is no current match within the brackets, or the match result in M2 has been output to M1 more than a selected number of times. In either case, the M2 match value is decremented prior to its next output on the $M1_o$ line. If $M1_a$ is non-zero, meaning that a matching character was found between the brackets, and the counter is non-zero, then the M2 match value is recirculated without change in the M2 line.

The recirculation of M2 values in a right-flag cell is effected through input (4) of the $L2_i$ logic element 81. Decrementing the M2 value is accomplished by the decrementing circuit 93, which is selected by input (2) of the $L2_o$ logic element 84.

Initialization:

Initialization of the search cells is controlled by the initialization logic, which consists of a counter 300 and a decoder 302, as shown in FIG. 10. The counter 300 is of the synchronous binary type, with three bits of output, on lines 304, a separate count enable control on line 306, and a means for restarting the count from zero, on line 308. The binary counter value provides the input to the decoder 302 over lines 304. The first five outputs of the decoder, which are selected when the counter has a value between zero and four, form the clock lines for the five registers to be programmed during initialization. The sixth output is left unused so that external circuitry may be initialized on one of the initialization passes without affecting the cells. The seventh output is used to put the cell into search mode and to disable the counter, such that the seventh output remains enabled until the next reset cycle.

The initialization counter 300 clocks on the falling edge of a clock signal CLKI applied to the counter, but only when two conditions are met. The first condition is that the count has not yet reached seven, as discussed. The second condition is that, on the previous rising edge of CLKI, the INITI line was asserted. This is simply the output of a D flip-flop 210 in the INITI-INITO connection inside the cell. This flip-flop output is counted as one input of an AND gate 310, the other input being derived from the seventh output of the decoder 302. The output of the AND gate 310 is the enable line 306 of the counter 300.

As FIG. 10 also shows, the output of the character register 214 provides the data for loading into each of the registers during initialization. The output of the character register becomes valid after a rising edge of CLKI, and the initialization counter counts after a falling edge of CLKI (if INITI was previously asserted). As the initialization counter 300 counts, the output selected by the decoder is deselected, and this transition is used to store the output of the character register in one of the five registers to be initialized. Thus, the character input lines are used to provide the data that programs the cell during initialization.

The initialization cycle repeats with a reset of a cell or group of cells. A reset involves the momentary assertion of the RESETI line, causing the cell to assume a known initial state. The important feature of this state is the initialization counter restarting its count from zero.

Multiple Cell Initialization:

Groups of cells are formed by connecting the outputs of one cell to the inputs of the next, with the CLKI and RESETI signals shared among all cells in a group. The initialization scheme is designed so that any cell in the group can be programmed by manipulation of inputs to only the first cell, therefore requiring no extra lines to control and use a group of cells independently of the number of cells in the group.

This feature of the initialization scheme depends on the second D-type flip-flop 211 in the INITI to INITO connection in a cell. The presence of a second flip-flop causes the data that was present at the INITI line of the cell to appear on the INITO line after the second rising edge of CLKI. The data at the character input (CI) lines appears on the character output (CO) lines after the first rising edge of CLKI. Thus the INITI signal from one cell reaches the INITI of the next cell along with the second character given to the CI of the first cell. Similarly, the INITI signal would reach the third cell along with the third character given to the CI of the first cell.

Using the scheme, the initialization procedure for n cells can be outlined as follows:

1. Momentarily raise the RESETI signal.
2. Assert the INITI signal to the first cell.
3. Set the CI lines to the first cell to the value for the first register to be programmed in the first cell.
4. Raise and lower (pulse) the CLKI line. (On the first pass through these steps, this initializes the first register of the first cell.)
5. Deassert the INITI signal to the first cell.
6. Set the CI lines to the first cell to the data for the first register to be programmed in the second cell. (Initially, the decoder output #0 line will be asserted, and the first register of the second cell will be initialized.)
7. Pulse the CLKI line.
8. Repeat 6 and 7 for each of the n cells in the group.
9. Repeat 2, 3, 4, 5 now providing on the CI lines the data for the second register in the first cell.
10. Repeat 8 for each of the n cells in the group.
11. Repeat 9 and 10 for each register to be programmed.

In step 4, pulsing the clock signal causes the decoder 302 to advance from its first to its second output, thereby clocking data from the character register into the first register (the pattern register). Since the INITI signal is then deasserted (step 5), subsequent clock pulses do not affect the first cell .However, the INITI signal pulse is propagated from cell to cell, to effect initialization of the first register in each cell, as defined by steps 6, 7 and 8. to initialize the second register in each cell, the INITI signal is asserted again (step 2), and subsequent clock signals effect initialization of the second register.

Note that this initialization scheme is flexible in that it will allow the programming of any number of registers as exist in the cell without adding any additional lines for control or data. The only added complexity may be to increase the number of bits provided by the initialization counter 300 and decoder 302, both of which are internal to a cell.

After the last register is loaded during initialization, the cells are operated in a search mode. The INITI line is asserted a final time, and the first character of a stream of characters to be searched against the data stored in the cells is presented to the CI lines of the first cell in the group. The match input lines to the first cell are held at logical zero. The CLKI line is pulsed to clock the character into the cell's character register. The match logic compares the character with the pattern and produces a result on the match output lines. The second character is presented on the CI lines of the first cell, and the cycle repeats, with the first character and match output being loaded in the second cell on the same rising edge of CLKI which loads the second character. This cycle is repeated for every character to be searched. When the character and pattern match, the information is carried along the match output lines and is detected as a match when it appears at the last cell in the group, as described in the foregoing descriptive sections.

It will be appreciated from the foregoing that the present invention represents a significant advance in the field of special search processors. In particular, the use of tolerance values to represent a degree of matching provides a useful improvement over a simple binary match result. Furthermore, the use of multiple match lines for storing and manipulating match results provides a variety of search possibilities, all of which are performed in a concurrent or systolic manner.

## Claims

1.  A special-purpose search processor comprising:
    a plurality of serially connected cells (20, 21, 22);

13

a character line (8) serially connecting the cells, for transferring from cell to cell a data stream to be searched; and

a first match line (M1) serially connecting the cells for transferring comparison results from cell to cell;

wherein each cell includes

a pattern register (28) for storing part of a pattern to be searched for,

comparator means (220) for comparing the contents of the pattern register with successive characters on the character line, and

match logic (83) for generating a signal for output on the match line based on the result of the comparison and on a signal input on the match line,

a delay register (91);

characterized in that:

each cell further includes

a character register (214) for storing temporarily a character of the data stream to be searched, the character register of the cells being serially connected to form said character line;

a first match register (87) for receiving on the first match line from a preceding cell a multibit tolerance value indicative of a degree of match between the search pattern and the data stream, the delay register (91) being connected to receive the output from the first match register of the cell, the combination of the first match register and the delay register being denoted a match/delay register pair, the match/delay register pairs of the cells being serially connected to form the first match line;

the processor further comprises

means for gating the data stream from cell to cell in the character line in response to a periodic, clock signal;

means (80, 217) in a selected cell for inputting an initial multibit tolerance value into the first match line, to indicate the degree of mismatch that will be tolerated in a search of the input data stream; and

means (92, 83) in the match logic of each cell for decrementing the multibit tolerance value transferred from the match register to the delay register when no match is detected in this cell, whereby the initial tolerance value will be decremented to zero if there is sufficient mismatch between a search pattern defined by a serial string of the character registers, and a corresponding serial string of characters in the input data stream.

2. A special purpose search processor as defined in claim 1 wherein

each cell further comprises at least one additional match register (M2, M3, M4), the respective match registers of the cells being serially connected to form additional match lines.

3. A special-purpose processor as defined in claim 2, and further comprising:

means (80-86) within each cell for controlling movement of tolerance values along and between match lines to effect a selected one of a variety of search functions.

4. A special-purpose processor as defined in claim 2, and further comprising:

a flag register (216) within each cell, for storing the status of a plurality of control flags; and

means (80-86) in the match logic and responsive to the states of the flags, for controlling the flow of information through the cell.

5. A special-purpose processor as defined in claim 4, wherein:

the means responsive to the states of the flags includes means (84) responsive in part to a first control flag (B), to effect copying of match information on the first match line (M1) to a second match line (M2), so that the copied match information is propagated along the second match line in synchronism with characters on the character line.

6. A special-purpose processor as defined in claim 4 or 5, wherein:

the means responsive to the states of the flags includes means (82, 80) responsive in part to a second control flag (O), for transferring a tolerance value carried on the first match line (M1) to a third match line (M3), and simultaneously transferring a tolerance value carried on the second match line (M2) back to the first match line.

7. A special-purpose processor as defined in claim 6, wherein:

the means responsive to the states of the flags includes means (86) responsive in part to a third control flag (L), for transferring a tolerance value carried on the first match line (M1) to a fourth match line (M4), for output from the search processor.

8. A special-purpose processor as defined in claim 7, wherein:

the means responsive to the states of the flags includes means (85) responsive in part to a fourth control flag (C), for transferring to the first match line (M1) the greater of the tolerance values carried on the first and third match lines.

9. A special-purpose processor as defined in any of claims 4-8, wherein:

the means responsive to the states of the flags further includes means (85) responsive to a bypass flag, for selectively bypassing the delay register (91) and providing a propagation of values along the first match line (M1) at a rate synchronized with the rate of propagation of data along the character line (8).

10. A special-purpose processor as defined in any of claims 4-9, wherein:

each cell further includes a counter (222); and

the means responsive to the states of the flags further includes means (85) responsive in part to a fifth flag (R), for transferring a tolerance value carried on the second match line (M2) to the first match line (M1), and means (84, 81) for recirculating the value carried on the second match line, up to a maximum number of times as determined by a count stored in the counter.

11. A method for searching a serial data stream using a serially connected group of comparison cells (20, 21, 22) in a special-purpose processor, the method comprising the steps of :

initializing each cell by storing a pattern character in a pattern register (218) such that the comparison cells define at least one search pattern string, and by loading in a first cell of a search pattern string, a match register (87) with a preselected multibit tolerance value indicative of the degree of mismatch that will be tolerated in a search of the data stream

passing a data stream through the cells by applying the data stream as an input to a character register (214) of a first cell in the serially connected group of cells and applying clocking signals to the cells to cause propagation of the data stream along a character line (8) formed by the character registers,

detecting exact and inexact matches at each clocking signal, by comparing the contents of the character register (214) and the pattern register (218) in each cell,

passing simultanously with the propagation of the data stream, the multibit tolerance value from cell to cell by transferring at each clocking signal the contents of a match contents of match register (87) in each cell into a delay register (91), and simultaneously transferring the contents of the delay register of a preceding cell into the match register (87) of this cell, whereby the match registers and delay registers of the serially connected group of cells form a first match line (M1) and

if there is no match detected in the comparison step in a cell, decrementing the multibit tolerance value transferred from the match register (87) to the delay register (91) of this cell.

12. A method according to claim 11 wherein:

the step of initializing each cell also comprises initializing various control flags in a flag register (216)

and further comprising the step of, in a cell having a first flag set, transferring the tolerance value carried on the first match line to a second match line, for later use in performing the search.

13. A method as defined in claim 12, and further including the steps of:

in a cell having a second flag set, transferring the tolerance value carried on the second match line back to the first match line, and simultaneously transferring the tolerance value carried on the first match line into a third match line.

14. A method as set forth in claim 13, and further comprising the step of:

in a cell having a third flag set, selecting for propagation along the first match line the larger of the tolerance values carried on the first match line and one of the second and third match lines.

15. A method as defined in claim 13, and further including the step of:

in a cell with a designated flag set, transferring the tolerance value carried on the second match the back onto the first match line.

**16.** A method as defined in claim 12, for performing a logical OR search for a plurality of pattern strings, each of which has a first character, a last character and other characters, in which:
the first character of each pattern string contains a flag to load a desired tolerance value into the match register;
the last character of each pattern string contains a flag to transfer the tolerance value on the first match line to the second match line; and
the method includes a final step of outputting tolerance values indicative of a degree of match between the data stream searched and either of the pattern strings.

**17.** A method as set forth in claim 12, for performing a negate search function whereby a match is to be indicated only if the data stream does not contain a pattern string, in which:
the initializing step includes
initializing a first pattern string for which a match is required,
initializing an intermediate cell to contain a flag to effect copying of the tolerance value from the first match line to a second match line,
initializing a second pattern string to contain the string not required in the search, and
initializing a second intermediate cell after the second string, to contain a negate flag; and
the method further includes the steps of detecting a match for the first pattern string and transferring a corresponding tolerance value to the second match line, and in the cell with the negate flag set, recirculating the tolerance value carried on the second match line and transferring the recirculated tolerance value back to the first match line, unless a match indication is obtained for the second pattern string, in which case zero tolerance value is transferred to the first match line, to indicate that the second pattern string was present and no overall match is possible.

**18.** A method as defined in claim 12, for performing a common-prefix logical OR search, in which:
the initializing step includes
initializing a first pattern string to contain a common prefix for which a match is required,
initializing an intermediate cell to contain a flag to effect copying of the tolerance value from the first match line to a second match line,
initializing a second pattern string to contain one alternative pattern to follow the common prefix,
initializing a third pattern string to contain another alternative to follow the common prefix,
initializing a first cell of the third pattern string and any subsequent alternative pattern strings to contain an OR flag,
initializing a last cell of the third string and any subsequent alternative strings to contain a choose flag, and
initializing a last cell in a last of the alternative string to contain a last flag;
and the method further includes the steps of
searching for a match in the first pattern string and transferring it to the second match line,
searching for a match in the second pattern string,
as a result of the OR flag, transferring the result of the second pattern string match to the first match line, while simultaneously copying the tolerance value carried on the first match line into a third match line,
as a result of the choose flag, selecting from the tolerance values carried on the first match line and the third match line, and
as a result of the last flag, transferring a final tolerance result onto a fourth match line for output from the processor.

**19.** A method as defined in claim 12, for performing a variable-length don't-care search, in which:
the initializing step includes
initializing a first pattern string to be matched, initializing an intermediate cell with a maximum character count in its counter, and
initializing a second pattern string following the intermediate cell; and
the method further includes the steps of
searching for a match of the first pattern string,
in the intermediate cell, recirculating the tolerance value on the first match line, up to n times where n is a maximum number of characters permitted between the first pattern string and the second pattern string, and
comparing subsequent strings of data in the data stream with the second pattern string.

20. A method as defined in claim 12, for performing a variable-length-care search function for locating two pattern strings separated by any combination of up to n permissible characters in which:
the initializing step includes
initializing a first pattern string to be identified in the data stream,
initializing a second pattern string to be identified in the data stream, and
initializing an intermediate group of cells between the first pattern string and the second pattern string, including a first cell containing a flag to effect copying the first match line to a second match line, a plurality of cells each containing permissible characters, which may appear between the first pattern string and the second pattern sting up to n times, and a cell containing a "right" flag, to effect transfer of a match indicator from the second match line to the first match line; and
the method further includes the steps of
comparing the data steam with the first pattern string, transferring any match value to the second match line,
comparing each subsequent character in the data stream with each of the permissible characters,
decrementing the match indication saved on the second match line if there is no match with the permissible characters, and
transferring the match indicator saved on the second match lien back to the first match line up to n times, where n is a preselected total number of times that the permissible characters may appear in any combination.

**Revendications**

1. Un processeur de recherche spécialisé comprenant :
un ensemble de cellules connectées en série (20, 21, 22);
une ligne de caractères (8) connectant les cellules en série, pour transférer de cellule en cellule un train de données sur lequel une recherche doit être effectuée; et
une première ligne de concordance (M1) connectant les cellules en série, pour transférer des résultats de comparaison de cellule en cellule;
dans lequel chaque cellule comprend
un registre de configuration (28) destiné à enregistrer une partie d'une configuration à rechercher;
des moyens comparateurs (220) destinés à comparer le contenu du registre de configuration avec des caractères successifs présents sur la ligne de caractères, et
une logique de concordance (83) destinée à générer un signal destiné à être émis sur la ligne de concordance, sur la base du résultat de la comparaison et d'un signal qui est appliqué sur la ligne de concordance; et
un registre de retard (91),
caractérisé en ce que :
chaque cellule comprend en outre
un registre de caractères (214) qui est destiné à enregistrer temporairement un caractère du train de données sur lequel on doit effectuer une opération de recherche, le registre de caractères des cellules étant connecté en série pour former la ligne de caractères;
un premier registre de concordance (87) destiné à recevoir sur la première ligne de concordance, à partir d'une cellule précédente, une valeur de tolérance à plusieurs bits qui indique un degré de concordance entre la configuration recherchée et le train de données, le registre de retard (91) étant connecté de façon à recevoir le signal de sortie qui provient du premier registre de concordance de la cellule, la combinaison du premier registre de concordance et du registre de retard constituant ce qu'on appelle une paire de registres de concordance/retard, et les paires de registres de concordance/retard des cellules étant connectées en série pour former la première ligne de concordance;
le processeur comprend en outre
des moyens pour transmettre sélectivement le train de données de cellule en cellule dans la ligne de caractères, sous la dépendance d'un signal d'horloge périodique;
des moyens (80, 217) incorporés dans une cellule sélectionnée pour appliquer une valeur de tolérance initiale à plusieurs bits à la première ligne de concordance, pour indiquer le degré de discordance qui sera toléré dans une recherche portant sur le train de données d'entrée; et

des moyens (92, 83), incorporés dans la logique de concordance de chaque cellule, pour décrémenter la valeur de tolérance à plusieurs bits qui est transférée du registre de concordance vers le registre de retard, lorsque aucune concordance n'est détectée dans cette cellule, grâce à quoi la valeur de tolérance initiale sera décrémentée jusqu'à zéro s'il y a une discordance suffisante entre une configuration recherchée qui est définie par une chaîne série des registres de caractères, et une chaîne de caractères série correspondante dans le train de données d'entrée.

2. Un processeur de recherche spécialisé défini dans la revendication 1, dans lequel
chaque cellule comprend en outre au moins un registre de concordance supplémentaire (M2, M3, M4), et les registres de concordance respectifs des cellules sont connectés en série pour former des lignes de concordance supplémentaires.

3. Un processeur spécialisé défini dans la revendication 2, et comprenant en outre :
des moyens (80, 86) incorporés dans chaque cellule pour commander le mouvement de valeurs de tolérance le long des lignes de concordance et entre celles-ci, dans le but de mettre en oeuvre une fonction sélectionnée parmi une variété de fonctions de recherche.

4. Un processeur spécialisé défini dans la revendication 2, et comprenant en outre :
un registre d'indicateurs (216), incorporé dans chaque cellule, pour enregistrer l'état d'un ensemble d'indicateurs de commande; et
des moyens (80-86) incorporés dans la logique de concordance et réagissant aux états des indicateurs, de façon à commander la circulation de l'information à travers la cellule.

5. Un processeur spécialisé défini dans la revendication 4, dans lequel :
les moyens qui réagissent aux états des indicateurs comprennent des moyens (84) qui réagissent en partie à un premier indicateur de commande (B), pour copier vers une seconde ligne de concordance (M2) l'information de concordance qui est présente sur la première ligne de concordance (M1), de façon que l'information de concordance qui est copiée se propage le long de la seconde ligne de concordance, en synchronisme avec des caractères sur la ligne de caractères.

6. Un processeur spécialisé défini dans la revendication 4 ou 5, dans lequel :
les moyens réagissant aux états des indicateurs comprennent des moyens (82, 80) qui réagissent en partie à un second indicateur de commande (O), de façon à transférer vers une troisième ligne de concordance (M3) une valeur de tolérance qui est acheminée sur la première ligne de concordance (M1), et à retransférer vers la première ligne de concordance une valeur de tolérance qui est acheminée sur la seconde ligne de concordance (M2).

7. Un processeur spécialisé défini dans la revendication 6, dans lequel :
les moyens réagissant aux états des indicateurs comprennent des moyens (86) qui réagissent en partie à un troisième indicateur de commande (L), de façon à transférer vers une quatrième ligne de concordance (M4) une valeur de tolérance qui est acheminée sur la première ligne de concordance (M1), pour la présenter en sortie du processeur de recherche.

8. Un processeur spécialisé défini dans la revendication 7, dans lequel :
les moyens réagissant aux états des indicateurs comprennent des moyens (85) qui réagissent en partie à un quatrième indicateur de commande (C), de façon à transférer vers la première ligne de concordance (M1), la plus grande des valeurs de tolérance qui sont acheminées sur les première et troisième lignes de concordance.

9. Un processeur spécialisé défini dans l'une quelconque des revendications 4 à 8, dans lequel :
les moyens réagissant aux états des indicateurs comprennent en outre des moyens (85) qui réagissent à un indicateur de contournement, de façon à contourner sélectivement le registre de retard (91), et à faire propager des valeurs le long de la première ligne de concordance (M1) à une cadence qui est synchronisée avec la cadence de propagation de données le long de la ligne de caractères (8).

10. Un processeur spécialisé défini dans l'une quelconque des revendications 4 à 9, dans lequel :
chaque cellule comprend en outre un compteur (222); et
les moyens réagissant aux états des indicateurs comprennent en outre des moyens (85) qui

18

réagissent en partie à un cinquième indicateur (R), de façon à transférer vers la première ligne de concordance (M1) une valeur de tolérance qui est acheminée sur la seconde ligne de concordance (M2), et des moyens (84, 81) destinés à faire circuler en boucle la valeur qui est acheminée sur la seconde ligne de concordance, jusqu'à un nombre de fois maximal qui est déterminé par une valeur de comptage enregistrée dans le compteur.

**11.** Un procédé pour accomplir une recherche portant sur un train de données série, utilisant un groupe de cellules de comparaison connectées en série (20, 21, 22) dans un processeur spécialisé, le procédé comprenant les étapes suivantes :

on initialise chaque cellule en enregistrant un caractère de configuration dans un registre de configuration (218), de façon que les cellules de comparaison définissent au moins une chaîne de configuration recherchée, et en chargeant une valeur de tolérance à plusieurs bits présélectionnée dans un registre de concordance (87), dans une première cellule d'une chaîne de configuration recherchée, cette valeur de tolérance étant représentative du degré de discordance qui sera toléré dans une recherche effectuée sur le train de données;

on transmet un train de données à travers les cellules, en appliquant le train de données à titre d'information d'entrée à un registre de caractère (214) d'une première cellule dans le groupe de cellules connecté en série, et en appliquant des signaux d'horloge aux cellules pour faire propager le train de données le long d'une ligne de caractères (8) qui est formée par les registres de caractères;

on détecte des concordances exactes et inexactes à chaque signal d'horloge, en comparant le contenu du registre de caractère (214) et du registre de configuration (218), dans chaque cellule;

on transmet la valeur de tolérance à plusieurs bits de cellule en cellule, simultanément à la propagation du train de données, en transférant, à chaque signal d'horloge, le contenu d'un registre de concordance (87) dans chaque cellule vers un registre de retard (91), et en transférant simultanément le contenu du registre de retard d'une cellule précédente vers le registre de concordance (87) de cette cellule, grâce à quoi les registres de concordance et les registres de retard des groupes de cellules connectées en série, forment une première ligne de concordance (M1), et

si aucune concordance n est détectée dans l'étape de comparaison dans une cellule, on décrémente la valeur de tolérance à plusieurs bits qui est transférée à partir du registre de concordance (87) vers le registre de retard (91) de cette cellule.

**12.** Un procédé selon la revendication 11, dans lequel :

l'étape d'initialisation de chaque cellule comprend également l'initialisation de divers indicateurs de commande dans un registre d'indicateurs (216),

et elle comprend également l'étape, accomplie dans une cellule ayant un premier indicateur instauré, qui consiste à transférer vers une seconde ligne de concordance la valeur de tolérance qui est acheminée sur la première ligne de concordance, pour une utilisation ultérieure dans l'accomplissement de la recherche.

**13.** Un procédé défini dans la revendication 12, et comprenant en outre les étapes suivantes :

dans une cellule ayant un second indicateur instauré, on retransfère vers la première ligne de concordance la valeur de tolérance qui est acheminée sur la seconde ligne de concordance, et on transfère simultanément vers une troisième ligne de concordance la valeur de tolérance qui est acheminée sur la première ligne de concordance.

**14.** Un procédé selon la revendication 13, et comprenant en outre l'étape suivante :

dans une cellule ayant un troisième indicateur instauré, on sélectionne pour la propagation sur la première ligne de concordance la plus grande des valeurs de tolérance qui sont acheminées sur la première ligne de concordance et sur l'une des seconde et troisième lignes de concordance.

**15.** Un procédé défini dans la revendication 13, et comprenant en outre l'étape suivante :

dans une cellule ayant un indicateur désigné instauré, on retransfère vers la première ligne de concordance la valeur de tolérance qui est acheminée sur la seconde ligne de concordance.

**16.** Un procédé défini dans la revendication 12, pour l'accomplissement d'une recherche correspondant à une fonction logique OU et portant sur un ensemble de chaînes de configurations, ayant chacune un premier caractère, un dernier caractère et d'autres caractères, dans lequel :

le premier caractère de chaque chaîne de configuration contient un indicateur pour le chargement d'une valeur de tolérance désirée dans le registre de concordance;

le dernier caractère de chaque chaîne de configuration contient un indicateur pour le transfert vers la seconde ligne de concordance de la valeur de tolérance présente sur la première ligne de concordance; et

le procédé comprend une étape finale consistant à présenter en sortie des valeurs de tolérance qui indiquent un degré de concordance entre le train de données sur lequel on effectue la recherche et les différentes chaînes de configurations.

17. Un procédé selon la revendication 12, pour l'accomplissement d'une fonction de recherche avec négation, selon laquelle une concordance doit être indiquée seulement si le train de données ne contient pas une chaîne de configuration, dans lequel :

l'étape d'initialisation comprend

l'initialisation d'une première chaîne de configuration pour laquelle une concordance est exigée,

l'initialisation d'une cellule intermédiaire de façon qu'elle contienne un indicateur pour copier vers une seconde ligne de concordance la valeur de tolérance qui provient de la première ligne de concordance,

l'initialisation d'une seconde chaîne de configuration pour qu'elle contienne la chaîne qui n'est pas exigée dans la recherche, et

l'initialisation d'une seconde cellule intermédiaire après la seconde chaîne, pour qu'elle contienne un indicateur de négation; et

le procédé comprend en outre les étapes qui consistent à détecter une concordance pour la première chaîne de configuration et à transférer une valeur de tolérance correspondante vers la seconde ligne de concordance, et, dans la cellule avec l'indicateur de négation instauré, les étapes qui consistent à faire circuler en boucle la valeur de tolérance qui est acheminée sur la seconde ligne de concordance et à retransférer vers la première ligne de concordance la valeur de tolérance qui circule en boucle, sauf si une indication de concordance est obtenue pour la seconde chaîne de configuration, auquel cas une valeur de tolérance égale à zéro est transférée vers la première ligne de concordance, pour indiquer que la seconde chaîne de configuration était présente et qu'aucune concordance globale n'est possible.

18. Un procédé défini dans la revendication 12, pour accomplir une recherche correspondant à une fonction logique OU avec un préfixe commun, dans lequel :

l'étape d'initialisation comprend

l'initialisation d'une première chaîne de configuration de façon qu'elle contienne un préfixe commun pour lequel une concordance est exigée;

l'initialisation d'une cellule intermédiaire de façon qu'elle contienne un indicateur pour copier vers une seconde ligne de concordance la valeur de tolérance qui provient de la première ligne de concordance;

l'initialisation d'une seconde chaîne de configuration pour qu'elle contienne une configuration possible pouvant suivre le préfixe commun;

l'initialisation d'une troisième chaîne de configuration pour qu'elle contienne une autre configuration possible pouvant suivre le préfixe commun;

l'initialisation d'une première cellule de la troisième chaîne de configuration et de n'importe quelles chaînes de configurations possibles suivantes, de façon qu'elle contienne un indicateur OU;

l'initialisation d'une dernière cellule de la troisième chaîne et de n'importe quelles chaînes possibles suivantes, de façon qu'elle contienne un indicateur de choix; et

l'initialisation d'une dernière cellule dans une dernière des chaînes possibles, de façon qu'elle contienne un dernier indicateur;

et le procédé comprend en outre les étapes suivantes :

on recherche une concordance dans la première chaîne de configuration, et on la transfère vers la seconde ligne de concordance,

on recherche une concordance dans la seconde chaîne de configuration,

sous l'action de l'indicateur OU, on transfère vers la première ligne de concordance le résultat de la recherche de concordance sur la seconde chaîne de configuration, tout en copiant simultanément vers une troisième ligne de concordance la valeur de tolérance qui est acheminée sur la première ligne de concordance,

sous l'action de l'indicateur de choix, on effectue une sélection parmi les valeurs de tolérance qui sont acheminées sur la première ligne de concordance et sur la troisième ligne de concordance, et

sous l'action du dernier indicateur, on transfère un résultat de tolérance final vers une quatrième ligne de concordance, pour la présentation en sortie du processeur.

19. Un procédé défini dans la revendication 12, pour accomplir une recherche avec des caractères indifférents de longueur variable, dans lequel :

l'étape d'initialisation comprend

l'initialisation d'une première chaîne de configuration pour laquelle on doit rechercher une concordance,

l'initialisation d'une cellule intermédiaire avec un compte de caractères maximal dans son compteur, et

l'initialisation d'une seconde chaîne de configuration à la suite de la cellule intermédiaire; et

le procédé comprend en outre les étapes suivantes :

on recherche une concordance pour la première chaîne de configuration,

dans la cellule intermédiaire, on fait circuler en boucle la valeur de tolérance sur la première ligne de concordance, jusqu'à n fois, en désignant par n un nombre maximal de caractères permis entre la première chaîne de configuration et la seconde chaîne de configuration, et

on compare des chaînes de données suivantes dans le train de données avec la seconde chaîne de configuration.

20. Un procédé selon la revendication 12, pour accomplir une fonction de recherche tenant compte de caractères de longueur variable, pour localiser deux chaînes de configurations séparées par une combinaison quelconque comprenant jusqu'à n caractères admissibles, dans lequel :

l'étape d'initialisation comprend

l'initialisation d'une première chaîne de configuration à identifier dans le train de données,

l'initialisation d'une seconde chaîne de configuration à identifier dans le train de données, et

l'initialisation d'un groupe de cellules intermédiaire entre la première chaîne de configuration et la seconde chaîne de configuration, comprenant une première cellule qui contient un indicateur pour copier vers une seconde ligne de concordance l'information présente sur la première ligne de concordance, un ensemble de cellules, chacune d'elles contenant des caractères admissibles, qui peuvent apparaître jusqu'à n fois entre la première chaîne de configuration et la seconde chaîne de configuration, et une cellule contenant un indicateur "droit", pour transférer une indication de concordance de la seconde ligne de concordance vers la première ligne de concordance; et

le procédé comprend en outre les étapes suivantes :

on compare le train de données avec la première chaîne de configuration, en transférant toute valeur de concordance vers la seconde ligne de concordance,

on compare chaque caractère suivant dans le train de données avec chacun des caractères admissibles,

on décrémente l'indication de concordance qui est sauvegardée sur la seconde ligne de concordance s'il n'y a pas de concordance avec les caractères admissibles, et

on retransfère jusqu'à n fois vers la première ligne de concordance l'indication de concordance qui est sauvegardée sur la seconde ligne de concordance, en désignant par n le nombre de fois total présélectionné que les caractères admissibles peuvent apparaître dans une combinaison quelconque.

**Patentansprüche**

1. Spezial-Suchprozessor, mit
   - einer Vielzahl seriell miteinander verbundener Zellen (20, 21, 22),
   - einer die Zellen seriell miteinander verbindenden Zeichen-Leitung (8) zum Übertragen eines zu durchsuchenden Datenflusses von Zelle zu Zelle, und
   - einer die Zellen seriell miteinander verbindenden ersten Übereinstimmungs-Leitung (M1) zum Übertragen von Vergleichsergebnissen von Zelle zu Zelle,
   wobei jede Zelle umfaßt:
   - ein Musterregister (28) zum Speichern eines Teils eines zu suchenden Musters,
   - eine Vergleichseinrichtung (220) zum Vergleichen der Inhalte des Musterregisters mit aufeinanderfolgenden Zeichen in der Zeichen-Leitung, und
   - einer Übereinstimmungs-Logik (83) zum Erzeugen eines auf die Übereinstimmungs-Leitung auszugebenden Signals aufgrund des Vergleichsergebnisses und eines Eingangssignals auf die Übereinstimmungs-Leitung,

- ein Verzögerungsregister (91),

dadurch gekennzeichnet, daß

jede Zelle ferner umfaßt:

- ein Zeichenregister (214) zum vorübergehenden Speichern eines Zeichens des zu durchsuchenden Datenflusses, wobei die Zeichenregister der Zellen seriell miteinander verbunden sind, derart, daß sie die Zeichen-Leitung bilden,

- ein erstes Übereinstimmungs-Register (87) zum Empfangen eines Mehrbit-Toleranzwertes von einer vorhergehenden Zelle auf der ersten Übereinstimmungs-Leitung, wobei der Toleranzwert einen Übereinstimmungsgrad zwischen dem Suchmuster und dem Datenfluß anzeigt, das Verzögerungsregister (91) so angeschlossen ist, daß es den Ausgang vom ersten Übereinstimmungs-Register der Zelle empfängt, dabei die Kombination des ersten Übereinstimmungs-Registers mit dem Verzögerungsregister ein Übereinstimmungs/Verzögerungs-Registerpaar bedeutet, dabei die Übereinstimmungs/Verzögerungs-Registerpaare der Zellen seriell miteinander verbunden sind, derart, daß sie die erste Übereinstimmungs-Leitung bilden,

der Prozessor ferner umfaßt:

- eine Einrichtung zum Leiten des Datenflusses von Zelle zu Zelle in der Zeichen-Leitung in Abhängigkeit von einem periodischen Taktsignal,

- eine Einrichtung (80, 217) in einer ausgewählten Zelle zur Eingabe eines anfänglichen Mehrbit-Toleranzwertes in die erste Übereinstimmungs-Leitung, derart, daß der Nichtübereinstimmungsgrad anzeigbar ist, der bei einer Durchsuchung des eingegebenen Datenflusses toleriert wird, und

- eine Einrichtung (92, 83) in der Übereinstimmungs-Logik jeder Zelle zum Erniedrigen des vom Übereinstimmungs-Register auf das Verzögerungsregister übertragenen Mehrbit-Toleranzwertes, wenn in dieser Zelle keine Übereinstimmung festgestellt wird, wobei der anfängliche Toleranzwert auf Null erniedrigt wird, wenn zwischen einem durch einen seriellen String des Zeichenregisters definierten Suchmuster und einem entsprechenden seriellen Zeichenstring im eingegebenen Datenfluß eine ausreichende Nichtübereinstimmung besteht.

2. Spezial-Suchprozessor nach Anspruch 1, bei dem
jede Zelle ferner wenigstens ein zusätzliches Übereinstimmungs-Register (M2, M3, M4) umfaßt, wobei die zugehörigen Übereinstimmungs-Register der Zellen zur Bildung zusätzlicher Übereinstimmungs-Leitungen seriell miteinander verbunden sind.

3. Spezial-Suchprozessor nach Anspruch 2, ferner
in jeder Zelle mit einer Einrichtung (80 bis 86) zur Steuerung der Transports von Toleranzwerten auf und zwischen Übereinstimmungs-Leitungen, derart, daß aus einer Vielzahl von Suchfunktionen eine ausgewählte ausführbar ist.

4. Spezial-Suchprozessor nach Anspruch 2, ferner
in jeder Zelle mit einem Kennzeichenregister (216) zum Speichern des Zustandes einer Vielzahl von Steuerkennzeichen, und einer Einrichtung (80 bis 86) in der Übereinstimmungs-Logik und zum Steuern des Informationsflusses durch die Zelle in Abhängigkeit von den Zuständen der Kennzeichen.

5. Spezial-Suchprozessor nach Anspruch 4, bei dem
die auf die Zustände der Kennzeichen ansprechende Einrichtung eine Einrichtung (84) umfaßt, die zum Teil auf ein erstes Steuerkennzeichen (B) anspricht, derart, daß Übereinstimmungsinformationen auf der ersten Übereinstimmungs-Leitung (M1) auf eine zweite Übereinstimmungs-Leitung (M2) kopierbar sind, so daß die kopierten Übereinstimmungsinformationen entlang der zweiten Übereinstimmungs-Leitung synchron mit Zeichen auf der Zeichen-Leitung transportierbar sind.

6. Spezial-Suchprozessor nach Anspruch 4 oder 5, bei dem
die auf die Zustände der Kennzeichen ansprechende Einrichtung eine Einrichtung (82, 80) aufweist, die zum Teil auf ein zweites Steuerkennzeichen (O) anspricht, derart, daß ein auf der ersten Übereinstimmungs-Leitung (M1) geleiteter Toleranzwert auf eine dritte Übereinstimmungs-Leitung (M3) übertragbar ist und gleichzeitig ein auf der zweiten Übereinstimmungs-Leitung (M2) anstehender Toleranzwert auf die erste Übereinstimmungs-Leitung zurück übertragbar ist.

7. Spezial-Suchprozessor nach Anspruch 6, bei dem
die auf die Zustände der Kennzeichen ansprechende Einrichtung eine Einrichtung (86) aufweist, die zum Teil auf ein drittes Steuerkennzeichen (L) anspricht, derart, daß ein auf der ersten Übereinstimmungs-Leitung (M1) anstehender Toleranzwert auf eine vierte Übereinstimmungs-Leitung (M4) zur Ausgabe aus dem Suchprozessor übertragbar ist.

8. Spezial-Suchprozessor nach Anspruch 7, bei dem
die auf die Zustände der Kennzeichen ansprechende Einrichtung eine Einrichtung (85) aufweist, die zum Teil auf ein viertes Steuerkennzeichen (C) anspricht, derart, daß auf die erste Übereinstimmungs-Leitung (M1) derjenige Toleranzwert übertragbar ist, der unter den auf der ersten und der dritten Übereinstimmungs-Leitungen anstehenden der größere ist.

9. Spezial-Suchprozessor nach einem der Ansprüche 4 bis 8, bei dem
die auf die Zustände der Kennzeichen ansprechende Einrichtung eine Einrichtung (85) aufweist, die auf ein Umgehungskennzeichen anspricht, derart, daß das Verzögerungsregister (91) wahlweise umgehbar ist und für einen Transport der Werte entlang der ersten Übereinstimmungs-Leitung (M1) mit einer mit der Transportgeschwindigkeit der Daten entlang der Zeichen-Leitung (8) synchronisierten Geschwindigkeit gesorgt ist.

10. Spezial-Suchprozessor nach einem der Ansprüche 4 bis 9, bei dem
jede Zelle ferner einen Zähler (222) umfaßt,
und
die auf die Zustände der Kennzeichen ansprechende Einrichtung ferner eine Einrichtung (85) aufweist, die zum Teil auf ein fünftes Kennzeichen (R) anspricht, derart, daß ein auf der zweiten Übereinstimmungs-Leitung (M2) anstehender Toleranzwert auf die erste Übereinstimmungs-Leitung (M1) übertragbar ist, und eine Einrichtung (84, 81) zum Durchlaufenlassen des auf der zweiten Übereinstimmungs-Leitung anstehenden Wertes bis zu einer maximalen Anzahl Male, die durch einen Zählstand im Zähler definiert ist.

11. Verfahren zum Durchsuchen eines seriellen Datenflusses unter Benutzung einer Gruppe seriell miteinander verbundener Vergleichszellen (20, 21, 22) in einem Spezial-Suchprozessor, gekennzeichnet durch die folgenden Arbeitsschritte:
   - Initialisieren jeder Zelle durch Speichern eines Musterzeichens in einem Musterregister (218) in der Weise, daß die Vergleichszellen wenigstens einen Suchmusterstring definieren, und durch Laden eines Übereinstimmungs-Registers (87) mit einem vorgewählten Mehrbit-Toleranzwert in eine erste Zelle eines Suchmusterstrings, wobei der Toleranzwert den Grad der Nichtübereinstimmung angibt, der bei einem Durchsuchen des Datenflusses toleriert wird;
   - Hindurchleiten eines Datenflusses durch die Zellen durch Eingabe des Datenflusses in ein Zeichenregister (214) einer ersten Zelle in der Gruppe seriell miteinander verbundener Zellen, und Senden von Taktsignalen an die Zellen, um den Datenfluß entlang einer von den Zeichenregistern gebildeten Zeichen-Leitung (8) transportieren zu lassen,
   - Feststellen von genauen und ungenauen Übereinstimmungen bei jedem Taktsignal durch Vergleichen der Inhalte des Zeichenregisters (214) und des Musterregisters (218) in jeder Zelle,
   - zur gleichen Zeit mit dem Transport des Datenflusses Hindurchleiten des Mehrbit-Toleranzwertes von Zelle zu Zelle durch Übertragen des Inhalts eines Übereinstimmungs-Registers (87) in jeder Zelle bei jedem Taktsignal in ein Verzögerungsregister (91) und durch gleichzeitiges Übertragen der Inhalte des Verzögerungsregisters einer vorhergehenden Zelle in das Übereinstimmungs-Register (87) dieser Zelle, derart, daß die Übereinstimmungs-Register und die Verzögerungsregister der Gruppe seriell miteinander verbundener Zellen eine erste Übereinstimmungs-Leitung (M1) bilden, und
   - wenn in der Vergleichsphase in einer Zelle keine Übereinstimmung festgestellt wird, Erniedrigen des vom Übereinstimmungs-Register (87) auf das Verzögerungsregister (91) dieser Zelle übertragenen Mehrbit-Toleranzwertes.

12. Verfahren nach Anspruch 11, bei dem
der Arbeitsschritt des Initialisierens jeder Zelle auch das Initialisieren verschiedener Steuerkennzeichen in einem Kennzeichenregister (216) umfaßt,
ferner umfassend den Arbeitsschritt, daß in einer Zelle, in der ein erstes Kennzeichen gesetzt ist, der auf der ersten Übereinstimmungs-Leitung anstehende Toleranzwert auf eine zweite Übereinstimmungs-Leitung zur späteren Benutzung bei der Durchführung der Suchoperation übertragen wird.

**13.** Verfahren nach Anspruch 12,
ferner umfassend den Arbeitsschritt, daß
in einer Zelle, in der ein zweites Kennzeichen gesetzt ist, der auf der zweiten Übereinstimmungs-Leitung anstehende Toleranzwert auf die erste Übereinstimmungs-Leitung übertragen wird, und gleichzeitig der auf der ersten Übereinstimmungs-Leitung anstehende Toleranzwert auf eine dritte Übereinstimmungs-Leitung übertragen wird.

**14.** Verfahren nach Anspruch 13,
ferner umfassend den Arbeitsschritt, daß
in einer Zelle, in der ein drittes Kennzeichen gesetzt ist, derjenige Toleranzwert zur Weiterleitung entlang der ersten Übereinstimmungs-Leitung gewählt wird, der von den an der ersten Übereinstimmungs-Leitung anstehenden Toleranzwerten der größere ist, und ein Toleranzwert auf der zweiten und der dritten Übereinstimmungs-Leitung.

**15.** Verfahren nach Anspruch 13,
ferner umfassend den Arbeitsschritt, daß
in einer Zelle, in der ein benanntes Kennzeichen gesetzt ist, der auf der zweiten Übereinstimmungs-Leitung anstehende Toleranzwert auf die erste Übereinstimmungs-Leitung zurück übertragen wird.

**16.** Verfahren nach Anspruch 12 zum Durchführen einer logischen ODER-Suchoperation nach einer Vielzahl von Musterstrings, von denen jeder ein erstes Zeichen, ein letztes Zeichen und andere Zeichen umfaßt, bei dem
- das erste Zeichen jedes Musterstrings ein Kennzeichen zum Laden eines gewünschten Toleranzwertes in das Übereinstimmungs-Register enthält,
- das letzte Zeichen jedes Musterstrings ein Kennzeichen zum Übertragen des Toleranzwertes von der ersten Übereinstimmungs-Leitung auf die zweite Übereinstimmungs-Leitung enthält, und
- das Verfahren als letzten Arbeitsschritt die Ausgabe von Toleranzwerten umfaßt, welche einen Übereinstimmungsgrad zwischen dem durchsuchten Datenfluß und einem der Musterstrings angibt.

**17.** Verfahren nach Anspruch 12 zum Durchführen einer Negier-Suchfunktion, bei der eine Übereinstimmung nur dann anzuzeigen ist, wenn der Datenfluß einen Musterstring nicht enthält, bei dem
der Arbeitsschritt der Initialisierung umfaßt:
- das Initialisieren eines ersten Musterstrings, für den eine Übereinstimmung gefordert ist,
- das Initialisieren einer Zwischenzelle in der Weise, daß sie ein Kennzeichen zum Kopieren des Toleranzwertes von der ersten Übereinstimmungs-Leitung auf eine zweite Übereinstimmungs-Leitung enthält,
- das Initialisieren eines zweiten Musterstrings in der Weise, daß er den in der Suche nicht benötigten String enthält, und
- das Initialisieren einer zweiten Zwischenzelle nach dem zweiten String mit einem Negier-Kennzeichen, und
das Verfahren ferner die Arbeitsschritte umfaßt:
Feststellen einer Übereinstimmung für den ersten Musterstring, und Übertragen eines entsprechenden Toleranzwertes auf die zweite Übereinstimmungs-Leitung, und, in der Zelle mit dem gesetzten Negier-Kennzeichen, Durchlaufenlassen des auf der zweiten Übereinstimmungs-Leitung anstehenden Toleranzwertes und Übertragen des durchgelaufenen Toleranzwertes zurück auf die erste Übereinstimmungs-Leitung, außer bei Anzeige einer Übereinstimmung für den zweiten Musterstring, in welchem Falle der Toleranzwert Null auf die erste Übereinstimmungs-Leitung übertragen wird, um anzuzeigen, daß der zweite Musterstring vorhanden war und keine Gesamtübereinstimmung möglich ist.

**18.** Verfahren nach Anspruch 12 zum Durchführen einer logischen ODER-Suchoperation nach gemeinsamem Präfix, bei dem der Arbeitsschritt der Initialisierung umfaßt:
- das Initialisieren eines ersten Musterstrings in der Weise, daR er ein gemeinsames Präfix, für den eine Übereinstimmung gefordert ist, enthält,
- das Initialisieren einer Zwischenzelle in der Weise, daß sie ein Kennzeichen zum Kopieren des Toleranzwertes von der ersten Übereinstimmungs-Leitung auf eine zweite Übereinstimmungs-Leitung enthält,

- das Initialisieren eines zweiten Musterstrings in der Weise, daß er ein dem gemeinsamen Präfix folgendes alternatives Muster enthält,
- das Initialisieren eines dritten Musterstrings in der Weise, daß er eine dem gemeinsamen Präfix folgende andere Alternative enthält,
- das Initialisieren einer ersten Zelle des dritten Musterstrings und jedes nachfolgenden alternativen Musterstrings mit einem ODER-Kennzeichen,
- das Initialisieren einer letzten Zelle des dritten Strings und jedes nachfolgenden alternativen Strings mit einem Auswahl-Kennzeichen, und
- das Initialisieren einer letzten Zelle in einem letzten der alternativen Strings mit einem Letzt-Kennzeichen,
und das Verfahren ferner die Arbeitsschritte umfaßt:
- Suchen nach einer Übereinstimmung im ersten Musterstring und Übertragen derselben auf die zweite Übereinstimmungs-Leitung,
- Suchen nach einer Übereinstimmung im zweiten Musterstring,
- als Folge des ODER-Kennzeichens Übertragung des Ergebnisses der Übereinstimmung beim zweiten Musterstring auf die erste Übereinstimmungs-Leitung bei gleichzeitigem Kopieren des auf der ersten Übereinstimmungs-Leitung anstehenden Toleranzwertes in eine dritte Übereinstimmungs-Leitung,
- als Folge des Auswahl-Kennzeichens Auswahl aus den auf der ersten und der dritten Übereinstimmungs-Leitung anstehenden Toleranzwerten, und
- als Folge des Letzt-Kennzeichens Übertragung eines endgültigen Toleranzergebnisses auf eine vierte Übereinstimmungs-Leitung zur Ausgabe durch den Prozessor.

19. Verfahren nach Anspruch 12 zum Durchführen einer Suchoperation bei nicht zu beachtenden Zeichen veränderbarer Länge, bei dem
der Arbeitsschritt der Initialisierung umfaßt:
- das Initialisieren eines ersten zu vergleichenden Musterstrings, das Initialisieren einer Zwischenzelle mit maximalem Zeichenzählstand ihres Zählers, und
- das Initialisieren eines der Zwischenzelle folgenden zweiten Musterstrings, und das Verfahren ferner die Arbeitsschritte umfaßt:
- Suchen nach einer Übereinstimmung mit dem ersten Musterstring,
- in der Zwischenzelle Duchlaufenlassen des Toleranzwertes auf der ersten Übereinstimmungs-Leitung bis zu n-mal, worin n die maximale Anzahl Zeichen ist, die zwischen dem ersten Musterstring und dem zweiten Musterstring zugelassen ist, und
- Vergleichen aufeinanderfolgender Datenstrings im Datenfluß mit dem zweiten Musterstring.

20. Verfahren nach Anspruch 12 zum Durchführen einer Suchfunktion bei zu beachtenden Zeichen veränderbarer Länge zur Auffindung von zwei Musterstrings, die durch eine beliebige Kombination mit bis zu n zulässigen Zeichen getrennt sind, bei dem
der Arbeitsschritt der Initialisierung umfaßt:
- das Initialisieren eines ersten im Datenfluß zu identifizierenden Musterstrings,
- das Initialisieren eines zweiten im Datenfluß zu identifizierenden Musterstrings, und
- das Initialisieren einer Zellenzwischengruppe zwischen dem ersten und dem zweiten Musterstring, einschließlich einer ersten Zelle, die ein Kennzeichen zum Kopieren der ersten Übereinstimmungs-Leitung auf eine zweite Übereinstimmungs-Leitung enthält, einer Vielzahl von Zellen, die je zulässige Zeichen enthalten, die zwischen dem ersten und dem zweiten Musterstring bis zu n-mal auftreten können, und einer Zelle mit einem "Richtig"-Kennzeichen zum Übertragen eines Übereinstimmungsanzeigers von der zweiten auf die erste Übereinstimmungs-Leitung,
und das Verfahren ferner die Arbeitsschritte umfaßt:
- Vergleichen des Datenflusses mit dem ersten Musterstring, Übertragen eines Übereinstimmungswertes auf die zweite Übereinstimmungs-Leitung,
- Vergleichen jedes nachfolgenden Zeichens im Datenfluß mit jedem der zulässigen Zeichen,
- Erniedrigen der auf der zweiten Übereinstimmungs-Leitung gesicherten Übereinstimmungsanzeige, wenn keine Übereinstimmung mit den zulässigen Zeichen besteht, und
- Übertragen der auf der zweiten Übereinstimmungs-Leitung gesicherten Übereinstimmungsanzeige bis zu n-mal zurück auf die erste Übereinstimmungs-Leitung, worin n eine vorausbestimmte Gesamtanzahl der Male ist, mit der die zulässigen Zeichen in einer beliebigen Kombination auftreten dürfen.

# Fig. 1

# Fig. 2

FIG. 3

## *Fig. 3a*

217'
218'
219'

TOLERANCE
PATTERN
MASK

220'

COMPARATOR

CHAR$_i$

CHARACTER

214'

CHAR$_o$

TOL (1)

MI$_i$ (2)

80'

TOL≠0

ELSE

LI$_i$

87'

MI
REG.

92'

-1 (1)

83'

CHAR≠PAT

ELSE

LIf

91'

DELAY
REG

MI$_o$

## *Fig. 3b*

M2$_i$ ——— 270 ——— (1)

ZERO ——— 271 ——— (2)

M2$_i$ ——— 272 ——— (3)

M2$_o$ ——— 273 ——— (4)

252

DATA IN MUX

CONTROL

DATA
OUT
274

266

258
(R+N).(M2$_i$>M2$_o$) — 254

259
N.(MI$_i$≠0) — 255

260
(R+N) — 256

261
"/" — 257

250

PRIORITY
ENCODER

## Fig. 4

| | | | | LAST | TOL. | PATTERN |
|---|---|---|---|---|---|---|

| LAST | 0 | 0 | 1 |
|---|---|---|---|
| TOL. | 1 | 0 | 0 |
| PATTERN | C | A | T |

(a)

| x | T | A | C | 0 0 | 0 0 | 0 0 |
|---|---|---|---|---|---|---|
| | | | | − | − | − |

(b)

| x | T | A | C MATCH | 1 0 | 0 0 | 0 0 |
|---|---|---|---|---|---|---|
| | | | | − | − | − |

(c)

| x | T | A | C | 1 1 | 0 0 | 0 0 |
|---|---|---|---|---|---|---|

(d)

| x | T | A MATCH | C | 1 0 | 1 0 | 0 0 |
|---|---|---|---|---|---|---|

(e)

| X | T | A | C | 1 0 | 0 1 | 0 0 | 0 0 |
|---|---|---|---|---|---|---|---|

(f)

| X | T MATCH | A | C | 0 0 | 1 0 | 0 0 |
|---|---|---|---|---|---|---|

(g)

| X | T | A | C | 0 1 | 0 0 |
|---|---|---|---|---|---|

(h)

| X | T | A | C | 1 0 |
|---|---|---|---|---|

MI MATCH REG.
MI DELAY REG.

| 1 | 0 |
|---|---|
| C | |

CHAR. REG.

## Fig. 5

LAST: 0 0 1 0
TOL: 1 0 0 0
PATTERN: C A T −

MI
M2
M3
M4

Fig. 6

Fig. 7

**Fig. 8**

PATTERN:

BRACKET PASS MASK ALL

NEGATE MASK ALL

I = TOL F A T [ I = TOL B L A C K ] C A LAST T

M1 M2 M3 M4

RESULT

**Fig. 9**

MASK ALL PASS BRACKET

CHOOSE OR I = TOL

CHOOSE OR I = TOL

MASK ALL LENGTH = 4 RIGHT

PATTERN:

I = TOL J E A N [ I = TOL sp - tab ] P A U LAST L

M1 M2 (-1) M3 M4

RESULT

EP 0 222 940 B1

Fig. 10

MATCH INPUT
(M1i - M4i)

MATCH OUTPUT
(M1o - M4o)

EP 0 222 940 B1